# EUROPEAN PATENT APPLICATION

(11) **EP 4 848 041 A1**
(43) Date of publication of application: **02.12.2026**
(21) Application number: 26179942.3
(22) Date of filing: 20.05.2026
(51) Int. Cl.: G06F 3/01

(54) **TECHNIQUES FOR SWITCHING BETWEEN AUDIBLE AND SILENT CONVERSATIONAL INTERACTIONS WITH AN ARTIFICIALLY INTELLIGENT (AI) ASSISTANT, AND SYSTEMS OF USE THEREOF**

(30) Priority: 20.05.2025 US 202563809242 P; 16.09.2025 US 202563882875 P; 06.02.2026 US 202663977756 P; 13.05.2026 US 202619676714
(71) Applicant: Meta Platforms Technologies, LLC, Menlo Park, CA 94025 (US)
(72) Inventor: DOGAN, Ata, Menlo Park, 94025 (US); WOLF, Claire DeLelys, Menlo Park, 94025 (US); HUANG, Willy, Menlo Park, 94025 (US); MARTINSON, Leif Haven, Menlo Park, 94025 (US); KITCHENS, Jessica, Menlo Park, 94025 (US); BORUDE, Sarang, Menlo Park, 94025 (US); FAUCHER, Aaron, Menlo Park, 94025 (US); MOON, Seungwhan, Menlo Park, 94025 (US); SHEN, Rongzhou, Menlo Park, 94025 (US); HEIDARI, Peyman, Menlo Park, 94025 (US); ROTH, David Peter, Menlo Park, 94025 (US); DONMEZ EDIZ, Meryem Pinar, Menlo Park, 94025 (US); YEH, Chun-Fu, Menlo Park, 94025 (US); STRAUSS, David, Menlo Park, 94025 (US); SMITH, Matthew, Menlo Park, 94025 (US); BHARDWAJ, Vikas Seshagiri Rao, Menlo Park, 94025 (US); DAMAVANDI, Babak, Menlo Park, 94025 (US); HUNG, Jacqueline, Menlo Park, 94025 (US); MUZAFFAR, Omer, Menlo Park, 94025 (US); HOBEIKA, Hind, Menlo Park, 94025 (US); KUMAR, Anuj, Menlo Park, 94025 (US); FITZGERALD, Eric, Menlo Park, 94025 (US); REID, Bryce Gibson, Menlo Park, 94025 (US); RODRIGUEZ, Daniel, Menlo Park, 94025 (US)
(74) Representative: Murgitroyd & Company

(57) **Abstract**

A method for automatically switching output modalities of an artificially intelligent (AI) assistant at a head-wearable device is described. The method includes receiving an invocation input requesting to an AI assistant at the head-wearable device with one or more output modalities. The method further includes identifying an output modality differentiator. The method further includes, in response to a user performing the invocation input: (i) causing the Al assistant to generate a response to the invocation input and (ii) causing the response to be presented via an output modality, the output modality based on the output modality differentiator. The method further includes, while the session with the AI assistant is ongoing: (i) identifying another output modality differentiator, (ii) causing the AI assistant to generate another response, and (iii) causing the other response to be presented via another output modality, the other output modality based on the other output modality differentiator.

## Description

### RELATED APPLICATION

This application claims priority to U.S. Provisional Application Serial No. 63/809,242, filed May 20, 2025, entitled "Methods For Switching Between Audible And Silent Conversational Interactions With An Artificially Intelligent (AI) Assistant, And Systems Of Use Thereof," U.S. Provisional Application Serial No. 63/882,875, filed September 16, 2025, entitled "Techniques For Switching Between Audible And Silent Conversational Interactions With An Artificially Intelligent (AI) Assistant, And Systems Of Use Thereof," and U.S. Provisional Application Serial No. 63/977,756, filed February 6, 2026, entitled "Techniques For Switching Between Audible And Silent Conversational Interactions With An Artificially Intelligent (AI) Assistant, And Systems Of Use Thereof".

### TECHNICAL FIELD

This relates generally to conversational interactions between an artificially intelligent (AI) assistant and a user.

### BACKGROUND

Communicating with current artificially intelligent (AI) assistants at head-wearable devices, such as smart glasses, in public spaces may be awkward (due to appearing to talk to no one), difficult (due to background noise and requiring long voice commands), and disruptive to others. Thus, there is a need for an ability for users to be able to carry out natural conversions with and query AI assistants discretely and inaudibly. However, user interfaces (Uls) presented at the displays of head-wearable devices may be obstructive while in public environments and/or while performing activities. Thus, there is also a need for an AI assistant that can automatically (without an explicit user input) switch between audible and inaudible output modes based on one or more context clues from the user or the user's environment.

As such, there is a need to address one or more of the above-identified challenges. A brief summary of solutions to the issues noted above are described below.

### SUMMARY

The present invention provides a non-transitory computer readable storage medium, a system and a method as defined in the appended claims.

In accordance with a first aspect, there is provided a non-transitory, computer-readable storage medium comprising executable instructions that, when executed by one or more processors, cause the one or more processors to:
in response to a user invocation of an ongoing session with an artificially intelligent (AI) assistant at a head-wearable device by a user, wherein the user invocation of the ongoing session is determined to be associated with an AI response-providing trigger, and the AI response-providing trigger is not a verbal input:
receive sensor data captured at one or more sensors;
at a first point in time:
   in accordance with a determination that first sensor data indicates satisfaction of the AI response-providing trigger, generate a first response to the user based on the first sensor data; and
   cause the first response to be presented at one or more displays of the head-wearable device;
at a second point in time:
   in accordance with a determination that second sensor data indicates satisfaction of the AI response-providing trigger, generate a second response, distinct from the first response, to the user based on the second sensor data; and
   cause the second response to be presented at the one or more displays of the head-wearable device.

The executable instructions may further cause the one or more processors to:
in response to the user invocation of the ongoing session with the AI assistant at the head-wearable device:
before receiving the sensor data captured at the one or more sensors of the head-wearable device, receive a prompt from the user, wherein generating the first response and generating the second response are further based on the prompt.

The executable instructions may further cause the one or more processors to:
in response to the user invocation of the ongoing session with the AI assistant at the head-wearable device:
in response to receiving the prompt from the user:
generate a prompt response to the user based on the prompt; and
cause the prompt response to be presented at the one or more displays of the head-wearable device.

Generating the second response may be further based on the first response.

The sensor data may comprise image data captured at one or more cameras of the head-wearable device at the first point in time; and
the second sensor data may comprise second image data captured at one or more cameras of the head-wearable device at the second point in time.

The AI response-providing trigger may comprise one or more point gestures performed by the user.

Generating the first response may be further based on:
a point gesture of the one or more point gestures that is directed at an object; and
the object; and
generating the second response may be further based on:
a second point gesture of the one or more point gestures that is directed at a second object; and
the second object.

The AI response-providing trigger may comprise one or more of one or more hand gestures, one or more gaze gestures, and one or more objects of interest identified in one of the sensor data and the second sensor data.

Generating the first response and generating the second response may be further based on a previous session with the AI assistant at the head-wearable device.

The first response may comprise a follow-up suggestion; and
the executable instructions further cause the one or more processors to:
in response to the user invocation of the ongoing session with the AI assistant at the head-wearable device and at the first point in time:
after causing the first response to be presented at the one or more displays of the head-wearable device and in response to receiving an indication that the user selected the follow-up suggestion:
generate a follow-up response to the user based on the follow-up suggestion; and
cause the follow-up response to be presented at the one or more displays of the head-wearable device.

Generating the follow-up response to the user may be further based on one or more of the sensor data and the first response.

The satisfaction of the AI response-providing trigger may comprise a determination that a user action is directed toward the AI assistant.

The executable instructions may further cause the one or more processors to:
in response to the user invocation of the ongoing session with the AI assistant at the head-wearable device:
at a third point in time:
in accordance with a determination that third sensor data indicates satisfaction of the AI response-providing trigger, generate a third response to the user based on the third sensor data; and
cause the third response to be presented at the one or more displays of the head-wearable device.

The executable instructions may further cause the one or more processors to:
in response to the user invocation of the ongoing session with the AI assistant at the head-wearable device, wherein the user invocation of the ongoing session is determined to be associated with another AI response-providing trigger, and the other AI response-providing trigger comprises a verbal input:
at a fourth point in time:
in accordance with a determination that fourth sensor data indicates satisfaction of the other AI response-providing trigger, generate a fourth response to the user based on the fourth sensor data; and
cause the fourth response to be presented at the one or more displays of the head-wearable device.

The executable instructions may further cause the one or more processors to:
in response to another user invocation of another ongoing session with the AI assistant at the head-wearable device, wherein the other user invocation of the ongoing session is determined to be associated with the AI response-providing trigger:
receive other sensor data captured at the one or more sensors;
at a fourth point in time:
   in accordance with a determination that the other sensor data indicates satisfaction of the AI response-providing trigger, generate another response to the user based on the other sensor data; and
   cause the other response to be presented at the one or more displays of the head-wearable device;
at a fifth point in time:
   in accordance with a determination that additional sensor data indicates satisfaction of the AI response-providing trigger, generate an additional response to the user based on the additional sensor data; and
   cause the additional response to be presented at the one or more displays of the head-wearable device.

The first response may comprise one or more of:
information related to one or more objects detected in the sensor data;
a translation of language detected in the sensor data;
one or more pieces of information to complete one or more tasks associated with the sensor data;
a suggestion to perform one or more tasks based on the sensor data;
an output of one or more other tasks, determined by and performed by AI assistant based on the sensor data;
a zoomed-in portion of the sensor data; and
a suggestion to modify one or more extended-reality (XR) augments presented at the head-wearable device.

In accordance with a second aspect, there is provided a system comprising:
a head-wearable device comprising one or more sensors and one or more displays; and
one or more processors configured to:
   in response to a user invocation of an ongoing session with an artificially intelligent (AI) assistant at the head-wearable device by a user, wherein the user invocation of the ongoing session is determined to be associated with an AI response-providing trigger, and the AI response-providing trigger is not a verbal input:
   receive sensor data captured at the one or more sensors;
   at a first point in time:
      in accordance with a determination that first sensor data indicates satisfaction of the AI response-providing trigger, generate a first response to the user based on the first sensor data; and
      cause the first response to be presented at the one or more displays of the head-wearable device;
   at a second point in time:
      in accordance with a determination that second sensor data indicates satisfaction of the AI response-providing trigger, generate a second response, distinct from the first response, to the user based on the second sensor data; and
      cause the second response to be presented at the one or more displays of the head-wearable device.

The AI response-providing trigger may comprise one or more point gestures performed by the user.

In accordance with a third aspect, there is provided a method comprising:
in response to a user invocation of an ongoing session with an artificially intelligent (AI) assistant at a head-wearable device by a user, wherein the user invocation of the ongoing session is determined to be associated with an AI response-providing trigger, and the AI response-providing trigger is not a verbal input:
capturing sensor data captured at one or more sensors;
at a first point in time:
   in accordance with a determination that first sensor data indicates satisfaction of the AI response-providing trigger, generating a first response to the user based on the first sensor data; and
   presenting the first response at one or more displays of the head-wearable device;
at a second point in time:
   in accordance with a determination that second sensor data indicates satisfaction of the AI response-providing trigger, generating a second response, distinct from the first response, to the user based on the second sensor data; and
   presenting the second response at the one or more displays of the head-wearable device.

The AI response-providing trigger may comprise one or more point gestures performed by the user.

One example of a head-wearable device headset is described herein. This example head-wearable device includes one or more cameras, one or more displays (e.g., placed behind one or more lenses), one or more speakers, and one or more programs, where the one or more programs are stored in memory and configured to be executed by one or more processors. The one or more programs including instructions for performing operations for switching output modalities of an AI assistant at a head-wearable device, in accordance with some embodiments. The operations include receiving an invocation input (e.g., an invocation voice command, an invocation hand gesture, and/or an invocation gaze gesture) requesting to invoke a session with an artificially intelligent (AI) assistant at the head-wearable device with one or more output modalities (e.g., one or more audio outputs (e.g., providing an audio response at the one or more speakers of the head-wearable device) and/or one or more visual outputs (e.g., providing one or more visual responses at one or more display of the head-wearable device 110)). The operations further include identifying an output modality differentiator (e.g., based on the activity of the user, the location of the user, the input modality of the invocation input, etc.). The operations further include, in response to the user performing the invocation input: (i) causing the AI assistant to generate a response (e.g., an audio response and/or a visual response) to the invocation input and (ii) causing the response to be presented via an output modality of the one or more output modalities, the output modality based on the output modality differentiator. The operations further include, while the session with the AI assistant is ongoing: (i) identifying another output modality differentiator (e.g., based on the change of activity of the user, the change of location of the user, the change of input modality the user, etc.), distinct from the output modality differentiator, (ii) causing the AI assistant to generate another response, and (iii) causing the other response to be presented via another output modality, distinct from the output modality, of the one or more output modalities, the other output modality based on the other output modality differentiator.

As another example, the one or more programs including other instructions for providing AI assistant responses to a user in accordance with a determination that sensor data indicates satisfaction of an AI response-providing trigger, in accordance with some embodiments. In some embodiments, the other operations are executed in response to a user invocation (e.g., the invocation voice command) of an ongoing session with an AI assistant at the head-wearable device, wherein the user invocation of the ongoing session is determined to be associated with an AI response-providing trigger (e.g., a point gesture), and the AI response-providing trigger is a non-verbal input performed by a user. The other operations include receiving sensor data (e.g., image data) captured at one or more sensors. The other operations further include, at a first point in time: (i) in accordance with a determination that the sensor data indicates satisfaction of the AI response-providing trigger, generating a first response (e.g., a visual response) to the user based on the sensor data and (ii) causing the response to be presented at one or more displays of the head-wearable device. The other operations further include, at a second point in time: (i) in accordance with a determination that second sensor data indicates satisfaction of the AI response-providing trigger, generating a second response to the user based on the second sensor data and (ii) causing the second response to be presented at the one or more displays of the head-wearable device.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1F illustrate an example of a user 101 interacting with an artificially intelligent (AI) assistant via a plurality of input modalities and a plurality of output modalities, in accordance with some embodiments.
Figures 2A-2G illustrate a plurality of examples of the AI assistant providing a plurality of responses to the user during the session with the AI assistant, in accordance with some embodiments.
Figures 3A-3H illustrate a plurality of example visual responses that the AI assistant presents at the one or more displays of the head-wearable device, in accordance with some embodiments.
Figures 4A-4B illustrate the user performing a user input to cause the AI assistant to perform a set of tasks based on image data captured at the head-wearable device, in accordance with some embodiments.
Figures 5A-5F illustrate silent user inputs that the user performs to request the head-wearable device to present a zoom-in UI at the one or more displays of the head-wearable device 110, in accordance with some embodiments.
Figures 6A-6C illustrate the user interacting with the AI assistant while viewing a photo gallery UI presented at the head-wearable device, in accordance with some embodiments.
Figures 7A-7D illustrate the user interacting with an auto-capture feature of the head-wearable device during a session with the AI assistant, in accordance with some embodiments.
Figures 8A-8B flow diagrams for methods of user interactions with an AI assistant at a head-wearable device, in accordance with some embodiments.
Figures 9A, 9B, 9C-1, and 9C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semitransparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

A gaze gesture, as described herein, can include an eye movement and/or a head movement indicative of a location of a gaze of the user, an implied location of the gaze of the user, and/or an approximated location of the gaze of the user, in the surrounding environment, the virtual environment, and/or the displayed user interface. The gaze gesture can be detected and determined based on (i) eye movements captured by one or more eye-tracking cameras (e.g., one or more cameras positioned to capture image data of one or both eyes of the user) and/or (ii) a combination of a head orientation of the user (e.g., based on head and/or body movements) and image data from a point-of-view camera (e.g., a forward-facing camera of the head-wearable device). The head orientation is determined based on IMU data captured by an IMU sensor of the head-wearable device. In some embodiments, the IMU data indicates a pitch angle (e.g., the user nodding their head up-and-down) and a yaw angle (e.g., the user shaking their head side-to-side). The head-orientation can then be mapped onto the image data captured from the point-of-view camera to determine the gaze gesture. For example, a quadrant of the image data that the user is looking at can be determined based on whether the pitch angle and the yaw angle are negative or positive (e.g., a positive pitch angle and a positive yaw angle indicate that the gaze gesture is directed toward a top-left quadrant of the image data, a negative pitch angle and a negative yaw angle indicate that the gaze gesture is directed toward a bottom-right quadrant of the image data, etc.). In some embodiments, the IMU data and the image data used to determine the gaze are captured at a same time, and/or the IMU data and the image data used to determine the gaze are captured at offset times (e.g., the IMU data is captured at a predetermined time (e.g., 0.01 seconds to 0.5 seconds) after the image data is captured). In some embodiments, the head-wearable device includes a hardware clock to synchronize the capture of the IMU data and the image data. In some embodiments, object segmentation and/or image detection methods are applied to the quadrant of the image data that the user is looking at.

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors (used interchangeably with neuromuscular-signal sensors); (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Methods For Switching Between Audible And Silent Conversational Interactions With An Artificially Intelligent (AI) Assistant

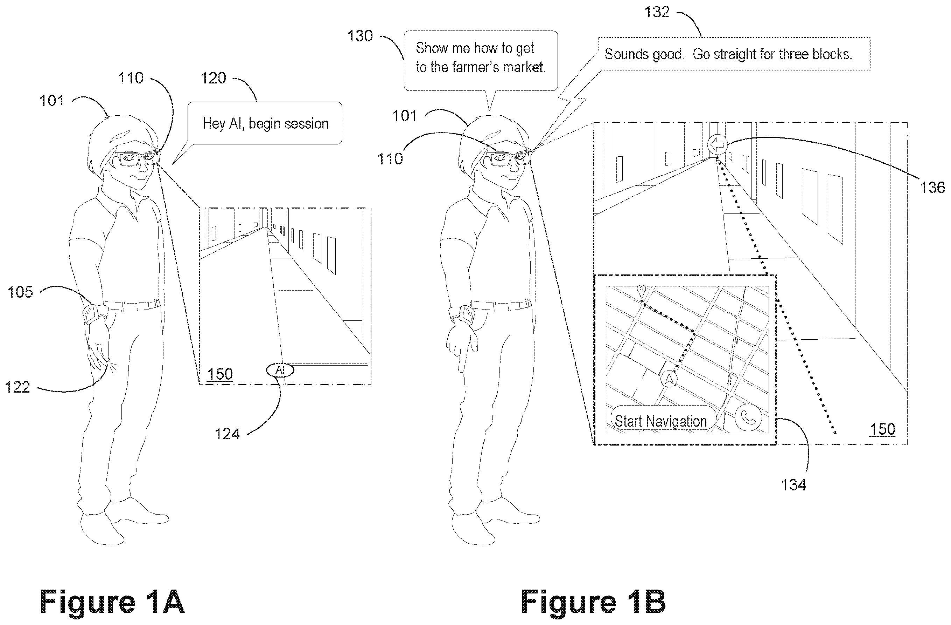

Figures 1A-1F illustrate an example of a user 101 interacting with an artificially intelligent (AI) assistant via a plurality of input modalities and a plurality of output modalities, in accordance with some embodiments. The AI assistant and/or one or more processes associated with the AI assistant is executed at one or more of a head-wearable device 110 and/or another device communicatively coupled to the head-wearable device 110 (e.g., a wrist-wearable device 105, a smartphone, a handheld intermediary processing device, a personal computer, and/or a server device). In some embodiments, the plurality of input modalities includes one or more voice inputs (e.g., the user 101 performs voice commands detected at one or more microphones of the head-wearable device 110 and/or the other device), one or more hand gesture inputs (e.g., the user 101 performs a hand gesture, hand movement, and/or a finger gesture detected by one or more biopotential sensors (e.g., an inertial measurement unit (IMU) sensor and/or an electromyography (EMG) sensor) of the wrist-wearable device 105 and/or one or more front-facing cameras of the head-wearable device 110), one or more point gesture inputs (e.g., the user 101 points and/or gestures at an object/person/structure/landscape within a field-of-view 150 of the user 101 detected at the one or more front-facing cameras of the head-wearable device 110), and/or one or more gaze inputs (e.g., the user 101 focusses their gaze at one or more real-world objects/persons/structures/landscapes and/or one or more extended reality (XR) augments within the field-of-view 150 detected at one or more gaze-tracking devices). In some embodiments, the AI assistant determines whether a user action (e.g., speech, hand movement, eye movement, etc.) is a user input directed toward the AI assistant and is not an action directed toward another person, toward another object, toward nothing, etc. The determination whether the user action is a user input directed toward the AI assistant is based on camera data, biopotential data, tone of the speech, volume of the speech, a name/proper now in front of/at a beginning of the speech, eye contact with another person, user gaze in a particular corner location of the field-of-view 150 (e.g., to engage with the AI assistant), a change in body direction, a change in eye focus, etc. In some embodiments, the plurality of output modalities includes one or more audio outputs (e.g., providing an audio response at one or more speakers of the head-wearable device 110 and/or the other device) and/or one or more visual outputs (e.g., providing one or more visual responses at one or more display of the head-wearable device 110). In some embodiments, the head-wearable device 110 is one or more of a XR headset, a pair of smart glasses, an XR hat, and/or one or more smart contacts. In some embodiments, the one or more displays of the head-wearable device 110 present a user interface (UI) including one or more XR augments to the user 101 within the field-of-view 150. In some embodiments, the AI assistant is a multi-modal artificial intelligence.

In some embodiments, an output modality with which a query response is presented is based on an input modality of with which a query input is performed. For example, an audio query response is presented in response to a spoken query (e.g., a voice command), and a visual query response is presented in response to a silent query (e.g., a hand gesture and/or a gaze gesture). In some embodiments, the output modality with which the query response is presented is based on an activity of the user 101. For example, the audio query response and/or a light visual query response (e.g., a small XR augment that occupies a small portion of the field-of-view 150 and/or integrates into a real-world environment) is presented in accordance with a determination that the user 101 is walking and/or a heavy visual query response (e.g., a large XR augment that occupies a large portion of the field-of-view 150)is presented in accordance with a determination that the user 101 is standing still. In some embodiments, an output modality with which a query response is presented is based on a location of the user 101. For example, the audio query response is presented in accordance with a determination that the user 101 is at home and/or a visual query response is presented in accordance with a determination that the user 101 is at a quiet location (e.g., a library, a museum, etc.). In some embodiments, the output modality with which the invocation response is presented is further based on other contextual information associated with the user 101 (e.g., calendar information, user preferences, previous user behaviors, background noise, time-of-day, privacy information, an amount of information to be presented in a response, etc.).

Figure 1A illustrates the user 101 initiating a session with the AI assistant, in accordance with some embodiments. In some embodiments, the AI assistant has access to sensor data (e.g., audio data captured at the one or more microphones, biopotential data captured at the one or more biopotential sensors, image data captured at one or more cameras, gaze data captured at the one or more gaze-tracking devices) captured at the head-wearable device 110 and/or the other device while the session is ongoing. The user 101 initiates the session with the AI assistant by performing a session invocation input such as an invocation voice command 120 (e.g., "Hey AI, begin session."), an invocation hand gesture 122 (e.g., a double index finger-pinch gesture), an invocation touch input (e.g., tapping a side of the head-wearable device 110), and/or an invocation gaze gesture (e.g., gazing at a session invocation augment within the UI). In some embodiments, in response to the session invocation input, the AI assistant causes an invocation response to be presented to the user 101. The invocation response is one or more of an audio invocation response (e.g., "Session started") presented at the one or more speakers of the head-wearable device 110, an audio invocation cue (e.g., a click sound) presented at the one or more speakers of the head-wearable device 110, and/or a visual invocation response (e.g., an invocation XR augment 124) presented at the one or more displays of the head-wearable device 110. In some embodiments, the output modality with which the invocation response is presented is based on the input modality of with which the session invocation input is performed (e.g., the audio invocation response is presented in response to the invocation voice command 120, the audio invocation cue is presented in response to the invocation touch input, and/or the visual invocation response is presented in response to the invocation hand gesture 122 and/or the invocation gaze gesture). In some embodiments, the output modality with which the invocation response is presented is further based on a location of the user 101, an activity of the user 101, and/or other contextual information associated with the user 101 (e.g., calendar information, user preferences, previous user behaviors, background noise, time-of-day, privacy information, an amount of information to be presented in a response, etc.).

Figure 1B illustrates the AI assistant providing a first response to the user 101 in response to a first query, in accordance with some embodiments. The user 101 provides the first query to the AI assistant by performing a first query input such as a first query voice command 130 (e.g., "Show me how to get to the farmer's market."), one or more first query hand gestures (e.g., using one or more hand gestures to interact with one or more augments associated with the first query within the UI), and/or one or more first query gaze gestures (e.g., using one or more gaze gestures to interact with the one or more augments associated with the first query within the UI). In response to the first query, the AI assistant executes one or more first tasks (e.g., find a route to the farmer's market) based on the first query. In some embodiments, in response to the first query input, the AI assistant causes a first query response to be presented to the user 101. In some embodiments, the first query response is based on the first query, the one or more first tasks, the location of the user 101, the activity of the user 101, and/or the other contextual information associated with the user 101. The first query response is one or more of an audio first query response 132 (e.g., "Sounds good. Go straight for three blocks.") presented at the one or more speakers of the head-wearable device 110, a heavy visual first query response 134 (e.g., a GPS UI element showing a route to the farmer's market) presented at the one or more display of the head-wearable device 110, and/or a light visual first query response 136 (e.g., a path and/or a signpost showing the route to the farmer's market) presented at the one or more displays of the head-wearable device 110. In some embodiments, the heavy visual first query response 134 is presented in a first portion of the field-of-view 150, and the light visual first query response 136 is presented in a second portion of the field-of-view 150 that is smaller than the first portion (e.g., such that light first query response 136 obstructs less of the field-of-view 150 than the heavy visual first query response 134, as illustrated in Figure 1B). In some embodiments, the heavy visual first query response 134 requires a greater amount of attention from the user 101 than the light visual first query response 136.

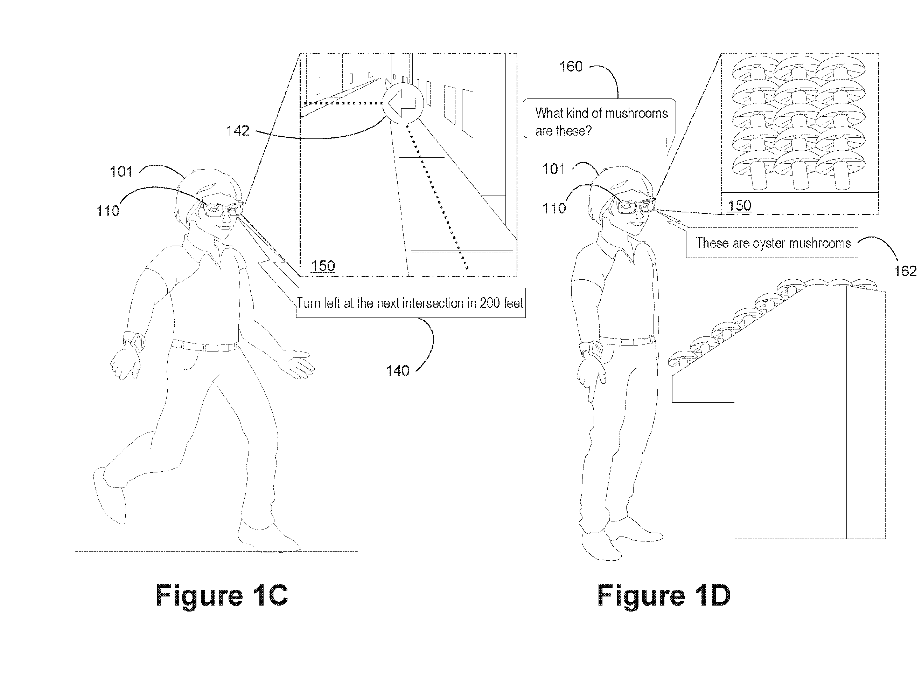

Figure 1C illustrates the first query response automatically changing output modality based on a change in activity of the user 101 during the session with the AI assistant, in accordance with some embodiments. While the session with the AI assistant is ongoing and in response to detecting a change in the activity of the user 101 (e.g., the user 101 starts walking), the AI assistant may update the output modality with which the first query response is presented is based on an updated activity of the user 101. For example, in accordance with a determination that the user 101 has changed from standing still (e.g., as illustrated in Figures 1A-1B) to walking (e.g., as illustrated in Figure 1C), the AI assistant causes the head-wearable device 110 to cease presenting the heavy visual first query response 134 and present an updated audio first query response 140 (e.g., "Turn left at the next intersection in 200 feet.") and/or an updated light visual first query response 142 (e.g., an updated path and/or an updated signpost showing the route to the farmer's market) so as to obstruct less of the field-of-view 150 while the user 101 is walking.

In some embodiments, the AI assistant may update the output modality with which the first query response is presented is based on an updated location of the user 101. For example, in accordance with a determination that the user 101 has left a street and entered a quiet location (e.g., a library, a museum, etc.) the AI assistant causes the head-wearable device 110 to cease presenting the audio first query response 132 and present an updated heavy visual query response (e.g., a map of the museum) and/or an updated light visual first query response 142 (e.g., the updated path and/or the updated signpost showing the route) so as to not present audio that other people may hear in quiet environments. In some embodiments, the AI assistant may update the output modality with which the first query response is presented is based on a level of background noise. For example, in accordance with a determination that the user 101 has entered a busy street the AI assistant causes the head-wearable device 110 to cease presenting the audio first query response 132 and present an updated heavy visual query response (e.g., a map of the museum) and/or an updated light visual first query response 142 (e.g., the updated path and/or the updated signpost showing the route) so as to not present audio when in loud environments where the user 101 may be unable to hear. In some embodiments, the AI assistant may update the output modality with which the first query response is presented is based on a change of input modality, as performed by the user 101. For example, in accordance with a determination that the user 101 has performed an additional input (e.g., the user 101 asks "When do I make a turn?") the AI assistant causes the head-wearable device 110 to cease presenting the heavy visual query response 134 and/or the light visual first query response 136 and present the updated audio first query response 140.

Figure 1D illustrates the AI assistant providing a second response to the user 101 in response to a second query, in accordance with some embodiments. The user 101 provides the second query to the AI assistant by performing a second query input such as a second query voice command 160 (e.g., "What kind of mushrooms are these?"). In response to the second query, the AI assistant executes one or more second tasks (e.g., determines what type of mushroom the user 101 is looking at, based on image data of the field-of-view 150 captured at the camera of the head-wearable device 110) based on the second query. In some embodiments, in response to the second query input, the AI assistant causes a second query response to be presented to the user 101. In some embodiments, the second query response is based on the second query, the one or more second tasks, the location of the user 101, the activity of the user 101, and/or the other contextual information associated with the user 101 (e.g., the image data of the field-of-view 150 captured at the camera of the head-wearable device 110). As illustrated in Figure 1D, the second query response is an audio second query response 162 (e.g., "These are oyster mushrooms.") presented at the one or more speakers of the head-wearable device 110. In some embodiments, the output modality with which the second query response is presented is based on the input modality of with which the second query input is performed (e.g., the audio second query response 162 is presented in response to the second query voice command 160). In some embodiments, the output modality with which the second query response is presented is further based on the activity of the user 101, a location of the user 101 and/or other contextual information associated with the user 101.

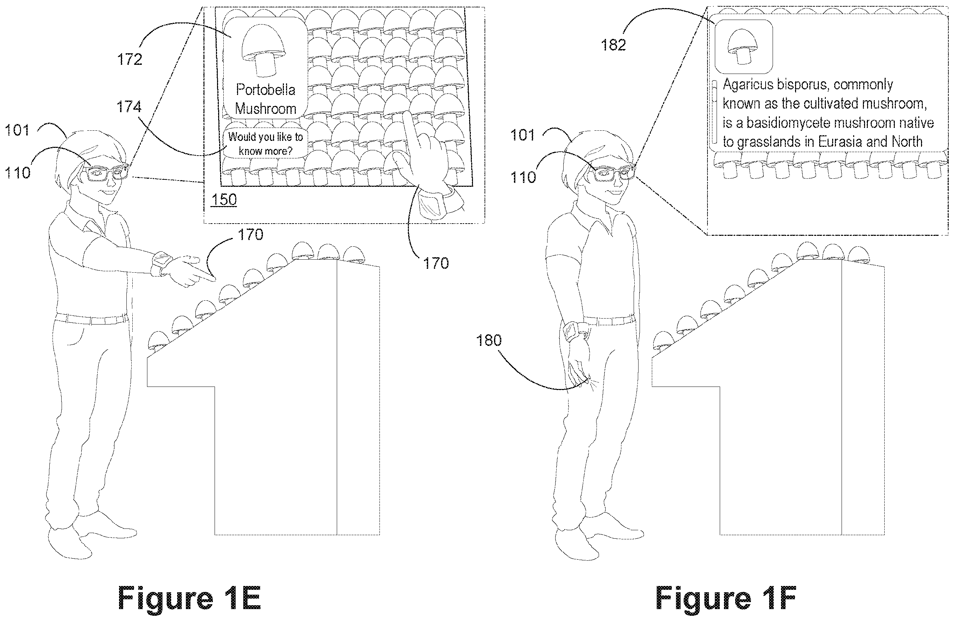

Figures 1E illustrates the AI assistant providing a third response to the user 101 in response to a third query, in accordance with some embodiments. The user 101 provides the third query to the AI assistant by performing a third query input such as a third query point gesture 170 (e.g., pointing at other mushrooms within the field-of-view). In response to the third query, the AI assistant executes one or more third tasks (e.g., determines what type of mushroom the user 101 is now looking at, based on other image data of the field-of-view 150 captured at the camera of the head-wearable device 110) based on the third query. In some embodiments, in response to the third query input, the AI assistant causes a third query response to be presented to the user 101. The third query response is based on the third query (e.g., the third query point gesture 170) and a previous query (e.g., the second query voice command 160). For example, the after the user 101 explicitly queries (e.g., by performing a voice command) the AI assistant to identify a first object (e.g., the oyster mushrooms) and later (e.g., during the session with the AI assistant) performs a point gesture directed at a second object (e.g., portabella mushrooms), the AI assistant determines that the user 101 is querying the AI assistant to identify the second object. As another example, after the user 101 asks (e.g., by performing a voice command) the AI assistant to provide a name a first artist of a first painting at a museum, and, later, the user 101 points at second painting at the museum, the AI assistant will provide a name of a second artist of the second painting. In some embodiments, the third query response is further based on the one or more third tasks, the location of the user 101, the activity of the user 101, and/or the other contextual information associated with the user 101 (e.g., the other image data of the field-of-view 150 captured at the camera of the head-wearable device 110). As illustrated in Figure 1E, the third query response is a visual third query response 172 (e.g., an UI augment identifying the other mushrooms as the portobella mushrooms) presented at the one or more displays of the head-wearable device 110. In some embodiments, the output modality with which the third query response is presented is based on the input modality of with which the third query input is performed (e.g., the visual third query response 172 is presented in response to the third query voice command 170). In some embodiments, the output modality with which the third query response is presented is further based on the activity of the user 101, a location of the user 101 and/or other contextual information associated with the user 101.

In some embodiments, in addition to and/or imbedded within the visual third query response 172 is a follow-up suggestion 174 (e.g., an UI augment offering a suggested follow-up request (e.g., "Would you like to know more?") that the AI assistant determines is likely to select). In some embodiments, the follow-up suggestion 174 is based on the third query input, the one or more third tasks, the third query response, the activity of the user 101, the location of user 101, and/or the other contextual information associated with the user 101. The follow-up suggestion is a visual follow-up suggestion (e.g., as illustrated in Figure 1E) presented at the one or more displays of the head-wearable device 110 and/or is an audio follow-up suggestion presented at the one or more speakers of the head-wearable device 110. In some embodiments, an output modality of the follow-up suggestion is a same output modality of the third query response.

Figure 1F illustrates the AI assistant providing a suggestion response to the user 101 in response to the user 101 selecting the follow-up suggestion 174, in accordance with some embodiments. In response to the user 101 performing a selection input 180 (e.g., a user input that indicates that the user 101 is accepting and/or selecting the follow-up suggestion 174), the AI assistant provides the suggestion response based on at least the visual third query response 172 and the follow-up suggestion 174. In some embodiments, the suggestion response is further based on the third query input, the one or more third tasks, the third query response, the activity of the user 101, the location of user 101, and/or the other contextual information associated with the user 101. The selection input is one or more of a selection voice command (e.g., "I would like to know more."), a selection hand gesture (e.g., an index finger pinch gesture, as illustrated in Figure 1F), a selection point gesture (e.g., the user 101 points at the follow-up suggestion 174 in the field-of-view 150), and/or a selection gaze gesture (e.g., the user 101 gazes at the follow-up suggestion 174 in the field-of-view 150). The suggestion response is one or more of an audio suggestion response 132 (e.g., "Agaricus bisporus, commonly known...") presented at the one or more speakers of the head-wearable device 110 and/or a visual suggestion response 182 (e.g., a UI element including a description of portobella mushrooms) presented at the one or more displays of the head-wearable device 110. In some embodiments, an output modality of the suggestion response is a same output modality of the follow-up suggestion 174. In some embodiments, the output modality of the suggestion response is based on an input modality of the selection input. For example, if the selection input is the selection voice command, the suggestion response is the audio suggestion response, and/or if the selection input is the selection hand gesture, the selection point gesture, and/or the selection gaze gesture, the suggestion response is the visual suggestion response. In some embodiments, the output modality of the suggestion response is further based on the activity of the user 101, the location of user 101, and/or the other contextual information associated with the user 101.

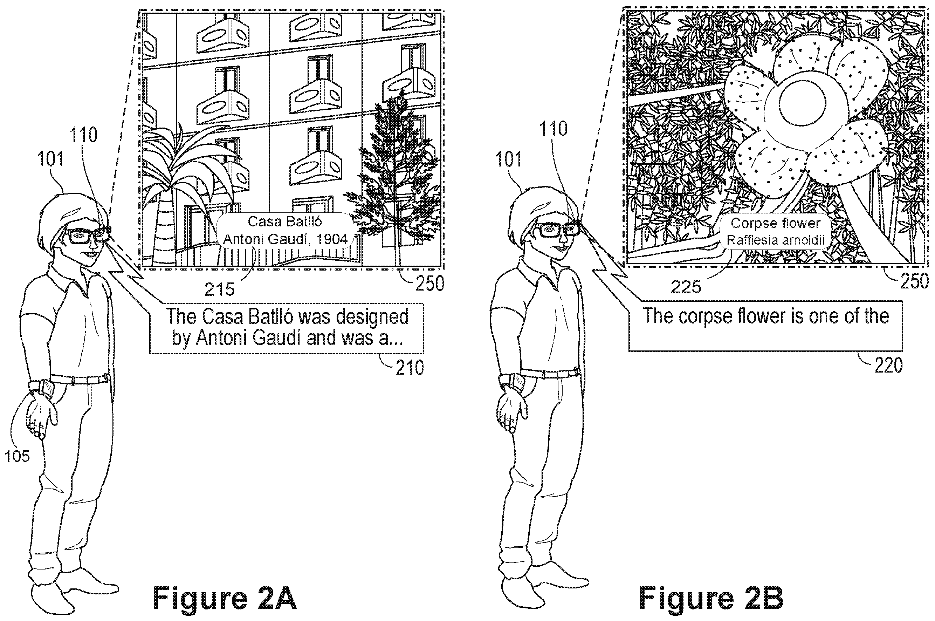

Figures 2A-2G illustrate a plurality of examples of the AI assistant providing a plurality of responses to the user 101 during the session with the AI assistant, in accordance with some embodiments. In some embodiments, each response of the plurality of responses is based on one or more of the image data captured at one or more cameras of the head-wearable device 110, personalized user context associated with the user 101 (e.g., user settings, user preferences, past user interactions with the AI assistant, user calendar information, user email information, etc.), location data (e.g., a current location of the user 101), audio data captures at one or more microphones of the head-wearable device 110, textual data (e.g., language, date/time information, phone numbers, addresses, menus, posters, QR codes, barcodes, etc. detected in the image data), attention cues (e.g., the user 101 holding one or more objects in front of the head-wearable device 101, the user 101 pointing at one or more objects, the user 101 holding their gaze on one or more objects, as detected in the image data), and/or a scene understanding (e.g., objects, landmarks, activities, etc. that trigger a response from the AI assistant). The AI assistant provides a response of the plurality of responses in response to a query from the user 101 and/or automatically, based on the scene understanding. In some embodiments, the user 101 may perform one or more user inputs (e.g., one or more voice commands, one or more hand-gesture inputs, one or more gaze gestures, etc.) to interact with the plurality of responses.

Figure 2A illustrates the AI assistant providing a first example response at the head-wearable device 110, in accordance with some embodiments. As illustrated in Figure 2A, the user 101 is looking at a landmark (e.g., the Casa Batlló) during the session with the AI assistant. In accordance with the determination that the user 101 is looking at the landmark (e.g., the landmark is within a user's field-of-view 250) and a determination, based on a first scene understanding that the user 101 is likely to interact with the first example response (e.g., the user 101 is visiting a city), the AI generates the first example response based on the landmark. The first example response is a first example visual response 215 (e.g., "Casa Batlló; Antoni Gaudí, 1904") presented at the one or more displays of the head-wearable device 110 and/or a first example audio response 210 (e.g., "The Casa Batlló was designed by Antoni Gaudí and was a...") presented at the one or more speakers of the head-wearable device 110. In some embodiments, in response to the first example response, the user 101 may perform the one or more user inputs to cause the AI assistant to provide more information regarding the landmark (e.g., a webpage providing more information regarding the Casa Batlló).

Figure 2B illustrates the AI assistant providing a second example response at the head-wearable device 110, in accordance with some embodiments. As illustrated in Figure 2B, the user 101 is looking at a second object of interest (e.g., a corpse flower) during the session with the AI assistant. In accordance with the determination that the user 101 is looking at the second object of interest (e.g., the object of interest is within the user's field-of-view 250) and a determination, based on a second scene understanding that the user 101 is likely to interact with the second example response (e.g., the user 101 is in a botanical garden), the AI generates the second example response based on the second object of interest. The second example response is a second example visual response 225 (e.g., "Corpse flower; Rafflesia arnoldii") presented at the one or more displays of the head-wearable device 110 and/or a second example audio response 220 (e.g., "The corpse flower is one of the national flowers of Indonesia...") presented at the one or more speakers of the head-wearable device 110. In some embodiments, in response to second example response, the user 101 may perform the one or more user inputs to cause the AI assistant to provide more information regarding the second object of interest (e.g., an article describing the corpse flower).

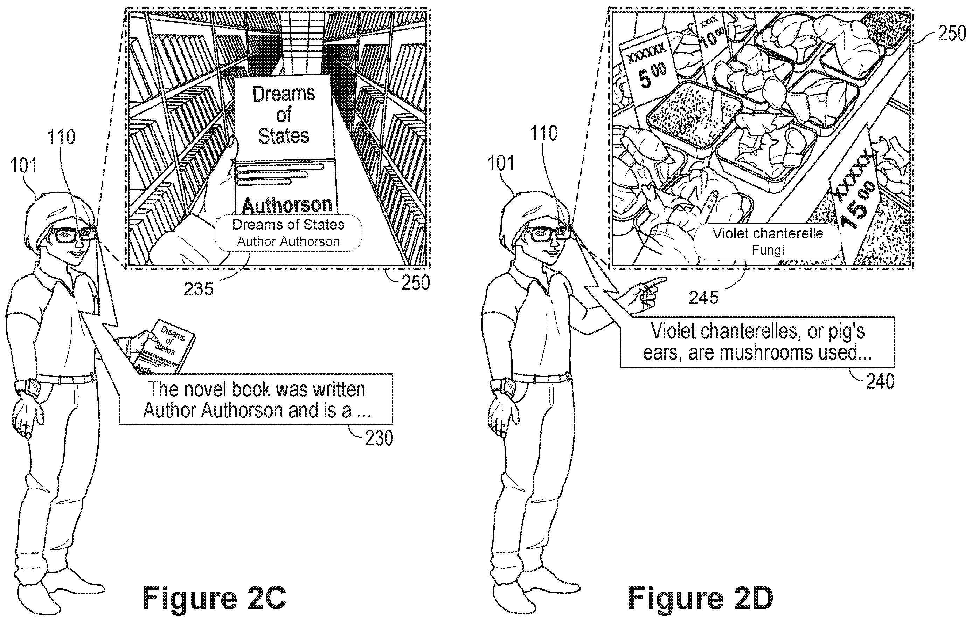

Figure 2C illustrates the AI assistant providing a third example response at the head-wearable device 110, in accordance with some embodiments. As illustrated in Figure 2C, the user 101 is holding up a third object (e.g., a book) to the head-wearable device 110 during the session with the AI assistant. In accordance with the determination that the user 101 is looking at holding up the third object to the head-wearable device 110 and a determination, based on a third scene understanding that the user 101 is likely to interact with the third example response (e.g., the user 101 is holding up the book to the head-wearable device 110 while in a library), the AI generates the third example response based on the third object. The third example response is a third example visual response 235 (e.g., "Dreams of States; Author Authorson") presented at the one or more displays of the head-wearable device 110 and/or a third example audio response 230 (e.g., "The novel Book was written by Author Authorson and is a...") presented at the one or more speakers of the head-wearable device 110. In some embodiments, in response to third example response, the user 101 may perform the one or more user inputs to cause the AI assistant to provide more information regarding the third object (e.g., a list of reviews of the book).

Figure 2D illustrates the AI assistant providing a fourth example response at the head-wearable device 110, in accordance with some embodiments. As illustrated in Figure 2D, the user 101 is pointing at a fourth object (e.g., mushrooms) during the session with the AI assistant. In accordance with the determination that the user 101 is pointing at the fourth object and a determination, based on a fourth scene understanding that the user 101 is likely to interact with the fourth example response (e.g., the user 101 is pointing at the mushrooms while at a farmer's market), the AI generates the fourth example response based on the fourth object. The fourth example response is a fourth example visual response 245 (e.g., "Violet chanterelle; Fungi") presented at the one or more displays of the head-wearable device 110 and/or a fourth example audio response 240 (e.g., "Violet chanterelles, or pig's ears, are mushrooms used...") presented at the one or more speakers of the head-wearable device 110. In some embodiments, in response to fourth example response, the user 101 may perform the one or more user inputs to cause the AI assistant to provide more information regarding the fourth object (e.g., recipes that include the mushrooms as an ingredient).

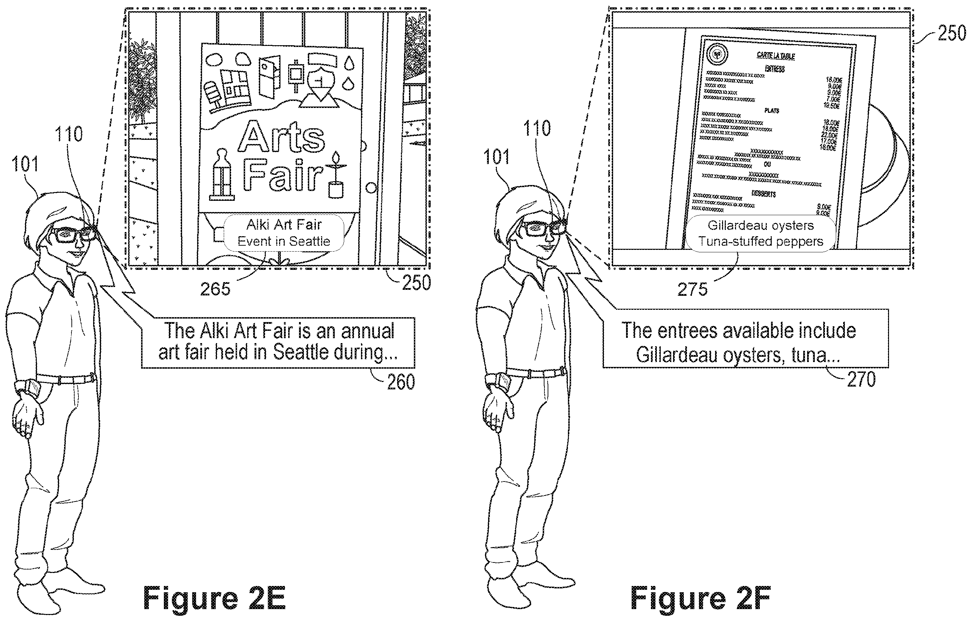

Figure 2E illustrates the AI assistant providing a fifth example response at the head-wearable device 110, in accordance with some embodiments. As illustrated in Figure 2E, the user 101 is looking at a fifth object including textual information (e.g., a poster) during the session with the AI assistant. In accordance with the determination that the user 101 is looking at the fifth object including textual information (e.g., the fifth object including textual information is within the user's field-of-view 250) and a determination, based on a fifth scene understanding that the user 101 is likely to interact with the fifth example response (e.g., the user 101 is looking at the fifth object including textual information for an extended period of time (e.g., ten seconds), indicating that the user is reading the fifth object including textual information), the AI generates the fifth example response based on the fifth object including textual information. The fifth example response is a fifth example visual response 265 (e.g., "Alki Art Fair; Event in Seattle, WA") presented at the one or more displays of the head-wearable device 110 and/or a fifth example audio response 260 (e.g., "The Alki Art Fair is an annual art fair held in Seattle during...") presented at the one or more speakers of the head-wearable device 110. In some embodiments, in response to fifth example response, the user 101 may perform the one or more user inputs to cause the AI assistant to provide more information regarding the fifth object including textual information (e.g., a webpage associated with an event associated with the poster).

Figure 2F illustrates the AI assistant providing a sixth example response at the head-wearable device 110, in accordance with some embodiments. As illustrated in Figure 2F, the user 101 is looking at a sixth object including textual information (e.g., a menu in a foreign language) during the session with the AI assistant. In accordance with the determination that the user 101 is looking at the sixth object including textual information (e.g., the sixth object including textual information is within the user's field-of-view 250) and a determination, based on a sixth scene understanding that the user 101 is likely to interact with the sixth example response (e.g., the sixth object including textual information includes text in a foreign language that the user 101 does not understand), the AI generates the sixth example response (e.g., a translation of the textual information on the sixth object) based on the sixth object including textual information. The sixth example response is a sixth example visual response 275 (e.g., "Gillardeau Oysters; Tuna-Stuffed Peppers") presented at the one or more displays of the head-wearable device 110 and/or a sixth example audio response 270 (e.g., "The entrees available include Gillardeau oysters, tuna...") presented at the one or more speakers of the head-wearable device 110. In some embodiments, in response to sixth example response, the user 101 may perform the one or more user inputs to cause the AI assistant to provide more information regarding the sixth object including textual information (e.g., a translation of every item on the menu).

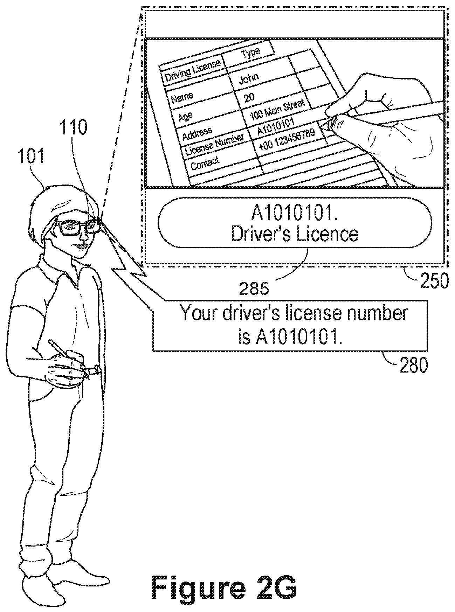

Figure 2G illustrates the AI assistant providing a seventh example response at the head-wearable device 110, in accordance with some embodiments. As illustrated in Figure 2G, the user 101 is writing on a seventh object including textual information (e.g., the user 101 is filling out a form) during the session with the AI assistant. In accordance with the determination that the user 101 is writing on the seventh object including textual information and a determination, based on a seventh scene understanding that the user 101 is likely to interact with the seventh example response (e.g., the user 101 needs to input information into the form that the user 101 may not remember), the AI generates the seventh example response (e.g., information that needs to be written on the form) based on the seventh object including textual information. The seventh example response is a seventh example visual response 285 (e.g., "A1010101; Driver's Licence") presented at the one or more displays of the head-wearable device 110 and/or a seventh example audio response 280 (e.g., "Your driver's license number is A1010101...") presented at the one or more speakers of the head-wearable device 110. In some embodiments, in response to seventh example response, the user 101 may perform the one or more user inputs to cause the AI assistant to provide more information regarding the seventh object including textual information (e.g., all information needed to complete the form).

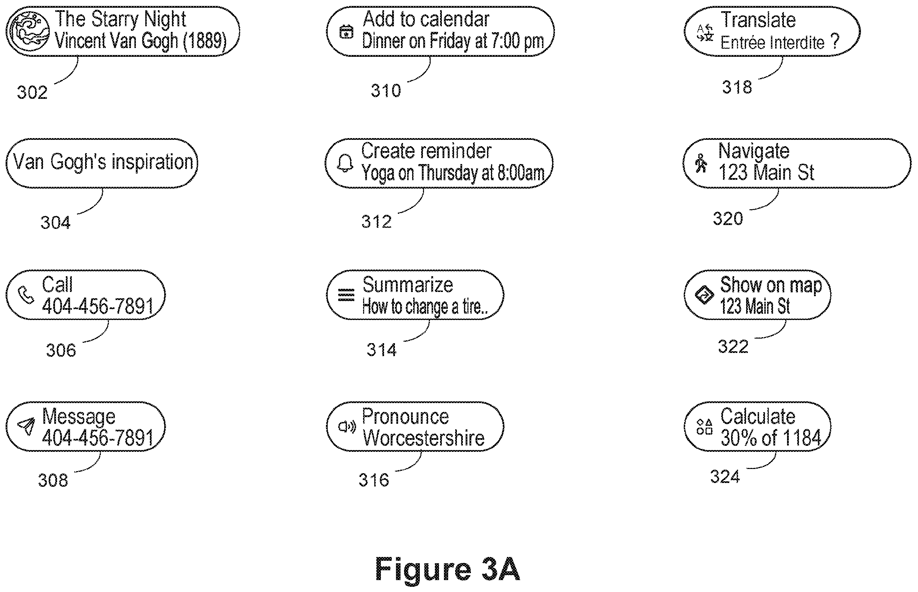

Figure 3A-3H illustrate a plurality of example visual responses that the AI assistant presents at the one or more displays of the head-wearable device 110, in accordance with some embodiments. Figure 3A illustrates a plurality of small visual responses that include a limited amount of information, in accordance with some embodiments. In some embodiments, the user 101 may perform an accept input of the one or more user inputs to cause the AI assistant to perform one or more tasks associated with the plurality of example visual responses and/or the user 101 may perform a decline input of the one or more user inputs to decline performing the one or more tasks. In some embodiments, a first informational response 302 (e.g., "The Starry Night; Vincent Van Gogh (1889)") includes graphical information and/or textual information about an object, a place, a person, and/or an event. In response to the first informational response 302, the user 101 may perform the one or more user inputs to cause the AI assistant to present more information regarding the object, the place, the person, and/or the event. In some embodiments, a second informational response 304 (e.g., "Van Gogh's inspiration") includes textual information about the object, the place, the person, and/or the event. In response to the second informational response 304, the user 101 may perform the one or more user inputs to cause the AI assistant to present more information regarding the object, the place, the person, and/or the event.

In some embodiments, a first suggested task response 306 (e.g., "Call; 555-555-5050") includes a suggestion to call a phone number. In response to the first suggested task response 306, the user 101 may perform the one or more user inputs to cause the AI assistant to initiate a call with the phone number. In some embodiments, a second suggested task response 308 (e.g., "Message; 555-555-5050") includes a suggestion to send a message to another phone number. In response to the second suggested task response 308, the user 101 may perform the one or more user inputs to cause the AI assistant to open a messaging application and prepare a message to send to the other phone number. In some embodiments, a third suggested task response 310 (e.g., "Add to calendar; Dinner on Friday at 7:00 pm") includes a suggestion to add an event to a calendar application associated with the user 101. In response to the third suggested task response 310, the user 101 may perform the one or more user inputs to cause the AI assistant to add the event to the calendar application associated with the user 101. In some embodiments, a fourth suggested task response 312 (e.g., "Create reminder; Yoga on Thursday at 8:00 am") includes a suggestion to add a reminder and/or an alarm to the calendar application associated with the user 101. In response to the fourth suggested task response 312, the user 101 may perform the one or more user inputs to cause the AI assistant to add the reminder and/or the alarm to the calendar application associated with the user 101. In some embodiments, a fifth suggested task response 314 (e.g., "Summarize; How to change a tire") includes a suggestion to prompt the AI assistant to prepare a summary of one or more events, persons, places, objects, and/or activities (e.g., a summary of how to change a car tire). In response to the fifth suggested task response 314, the user 101 may perform the one or more user inputs to cause the AI assistant to prepare the summary of the one or more events, persons, places, objects, and/or activities. In some embodiments, a sixth suggested task response 316 (e.g., "Pronounce; Worcestershire") includes a suggestion to prompt the AI assistant to present a pronunciation guide. In response to the sixth suggested task response 316, the user 101 may perform the one or more user inputs to cause the AI assistant to present the pronunciation guide. In some embodiments, a seventh suggested task response 318 (e.g., "Translate; Entrée Interdite?") includes a suggestion to translate one or more foreign language words. In response to the seventh suggested task response 318, the user 101 may perform the one or more user inputs to cause the AI assistant to translate one or more foreign language words. In some embodiments, an eighth suggested task response 320 (e.g., "Navigate; 123 Main St") includes a suggestion to prepare a navigation route to a location. In response to the eighth suggested task response 320, the user 101 may perform the one or more user inputs to cause a navigation application to prepare the navigation route to the location. In some embodiments, a ninth suggested task response 322 (e.g., "Show on map; 123 Main St") includes a suggestion to present a location on a map. In response to the ninth suggested task response 322, the user 101 may perform the one or more user inputs to cause a navigation application to present the location on a map. In some embodiments, a tenth suggested task response 324 (e.g., "Calculate; 30% of 1184") includes a suggestion to perform a mathematical calculation. In response to the tenth suggested task response 324, the user 101 may perform the one or more user inputs to cause the AI assistant to perform the mathematical calculation.

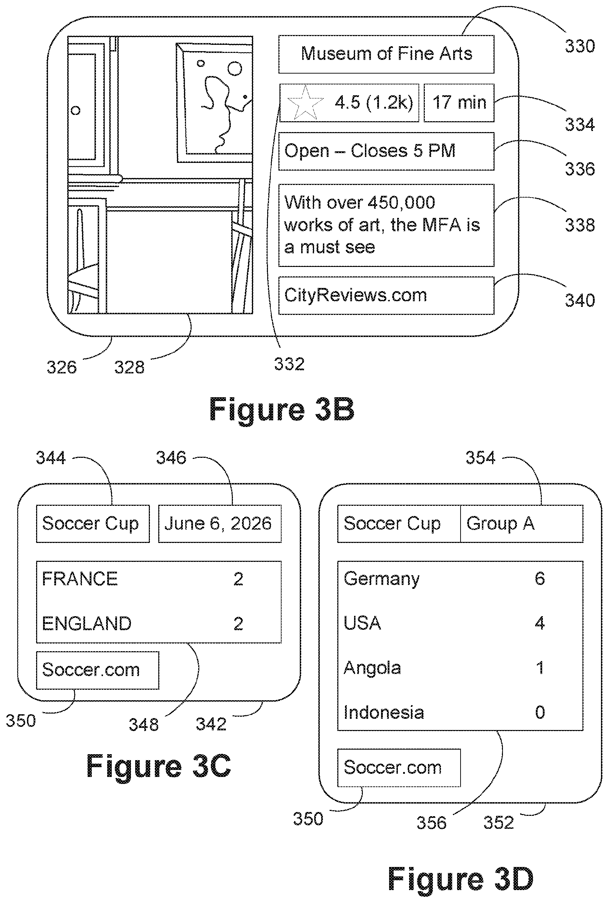

Figure 3B illustrates a location visual response 326, associated with a location (e.g., a Museum of Fine Arts), that the AI assistant presents at the one or more displays of the head-wearable device 110, in accordance with some embodiments. In some embodiments, the location visual response 326 is presented in response to a location query (e.g., "How do I get to the Museum of Fine Arts?") performed by the user 101. In some embodiments, the location visual response 326 includes a location image 328 that is representative of the location, a location title 330 (e.g., "Museum of Fine Arts") that is a name of the location, a location rating 332 (e.g., four and a half stars with 1200 reviews) that is representative of one or more reviews of the location, a location distance 334 (e.g., "17 min") that is representative of a distance between the user 101 and the location (e.g., a distance for the user 101 to travel to get to the location and/or a time for the user 101 to travel to get to the location), operating hours 336 (e.g., "Open - Closes 5 PM") that is representative of the operating hours of the location, a location cost (e.g., "$$$") that is representative of a cost associated with the location, a location description 338 (e.g., "With over 450,000 works of art, the MFA is a must see") that includes a description of the location, and/or a location source 340 (e.g., "CityReviews.com") that is representative of a source of location information (e.g., one or more webpages) provided in the location visual response 326. In some embodiments, the location visual response 326 is generated by the AI assistant based on the source of the location information.

Figure 3C illustrates a first sports visual response 342, associated with a first sporting event (e.g., a soccer game), that the AI assistant presents at the one or more displays of the head-wearable device 110, in accordance with some embodiments. In some embodiments, the first sports visual response 342 is presented in response to a first sports query (e.g., "How's the France - England going?") performed by the user 101. In some embodiments, the first sports visual response 342 includes a first sports image (e.g., a highlight video and/or a picture) associated with the first sporting event, a first sports title 344 (e.g., "Soccer Cup") that is a name of the first sporting event, a first sports time 346 (e.g., "June 6, 2026") that is representative of a time and/or date of the first sporting event, a first sports scorecard 348 (e.g., "France 2; England 2") that is representative of a score of the first sporting event, and/or a sports source 350 (e.g., "Soccer.com") that that is representative of a source of first sports information provided in the first sports visual response 342. In some embodiments, the first sports visual response 342 is generated by the AI assistant based on the source of the first sports information.

Figure 3D illustrates a second sports visual response 352, associated with a second sporting event (e.g., a soccer tournament), that the AI assistant presents at the one or more displays of the head-wearable device 110, in accordance with some embodiments. In some embodiments, the second sports visual response 352 is presented in response to a second sports query (e.g., "How's team USA doing in the Soccer Cup?") performed by the user 101. In some embodiments, the second sports visual response 352 includes a second sports image (e.g., another highlight video and/or another picture) associated with the second sporting event, a second sports title 354 (e.g., "Soccer Cup; Group A") that is a name of the second sporting event, a second sports standings 356 (e.g., "Germany 6; USA 4; Angola 1; Indonesia") that is representative of a standings of the second sporting event, and/or the sports source 350 (e.g., "Soccer.com") that that is representative of a source of second sports information provided in the second sports visual response 352. In some embodiments, the second sports visual response 352 is generated by the AI assistant based on the source of the second sports information.

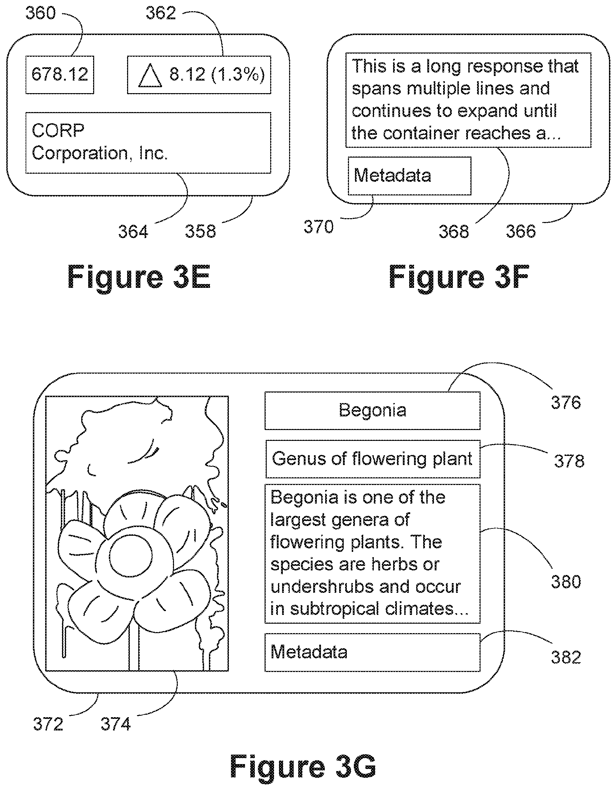

Figure 3E illustrates a stocks visual response 358, associated with one or more stocks, that the AI assistant presents at the one or more displays of the head-wearable device 110, in accordance with some embodiments. In some embodiments, the stocks visual response 358 is presented in response to a stocks query (e.g., "How are my stocks in Corporation, Inc. doing?") performed by the user 101. In some embodiments, the stocks visual response 358 includes a stock value 360 (e.g., "678.12") that is representative of a stock price the one or more stocks, a stock value change 362 (e.g., "8.12 (1.3%)") that is representative of a change of the stock price of the one or more stocks, and/or a stock title 364 (e.g., "CORP; Corporation, Inc.") that includes a ticker symbol and/or a company name associated with the one or more stocks. In some embodiments, the stocks visual response 358 is generated by the AI assistant based on a source of stock information.

Figure 3F illustrates a generic query visual response 366, associated with a response to a user query generated by the AI assistant, that the AI assistant presents at the one or more displays of the head-wearable device 110, in accordance with some embodiments. In some embodiments, the generic query visual response 366 is presented in response to the user query (e.g., "Where does the phrase 'I could eat a horse' come from?") performed by the user 101. In some embodiments, the generic query response 366 includes a textual response 368 (e.g., "This is a long response that spans multiple lines and continues to expand until the container reaches a...") that is representative of the response to the user query generated by the AI assistant and/or a response source 370 (e.g., "Metadata") that is representative of a source of response information (e.g., one or more webpages) provided in the generic query visual response 366. In some embodiments, the generic query visual response 366 is generated by the AI assistant based on the source of the response information.

Figure 3G illustrates a noun visual response 372, associated with a noun (e.g., a person, place, object, etc.), that the AI assistant presents at the one or more displays of the head-wearable device 110, in accordance with some embodiments. In some embodiments, the noun visual response 372 is presented in response to a noun user query (e.g., a query wherein the answer is a noun, such as "What kind of flower is this?") performed by the user 101. In some embodiments, the noun response 372 includes a noun image 374 that is representative of the noun (e.g., a begonia flower), a noun title 376 (e.g., "Begonia") that is a name of the noun, a noun short definition 378 (e.g., "Genus of flowering plant") that is representative of a definition of the noun, a noun description 380 (e.g., "Begonia is one of the largest genera of flowering plants. The species are herbs or undershrubs and occur in subtropical climates...") that is representative of a description of noun, and/or a noun source 382 (e.g., "Metadata") that is representative of a source of noun information (e.g., one or more webpages) provided in the noun visual response 372. In some embodiments, the noun visual response 372 is generated by the AI assistant based on the source of the noun information.

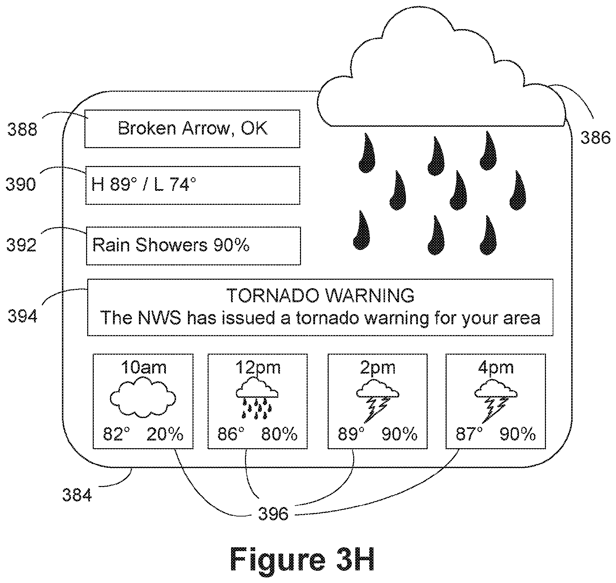

Figure 3H illustrates a weather visual response 384, associated with a weather report, that the AI assistant presents at the one or more displays of the head-wearable device 110, in accordance with some embodiments. In some embodiments, the weather visual response 384 is presented in response to a weather user query (e.g., "What's the weather like for today?") performed by the user 101. In some embodiments, the weather response 384 includes a weather image 386 that is representative of the weather report (e.g., an image representative of a current weather condition and/or an expected weather condition), a weather location 388 (e.g., "Broken Arrow, OK") that is a location associated with the weather report, a temperature 390 (e.g., "H 89° / L 74°") that is representative of a current temperature, a high temperature and/or a low temperature of the weather report, a weather condition 392 (e.g., "Rain Showers 90%") that is representative of the current weather condition and/or the expected weather condition, an inclement weather warning 394 (e.g., "TORNADO WARNING; The NWS has issued a tornado warning for your area") that is representative an inclement weather warning issues for the location associated with the weather report, a weather forecast 386 (e.g., an hourly weather forecast and/or a daily weather forecast) that is representative of future temperatures and/or future weather conditions, and/or a weather report source (e.g., "National Weather Service") that is representative of a source of weather information (e.g., one or more webpages) provided in the weather visual response 384. In some embodiments, the weather visual response 384 is generated by the AI assistant based on the source of the weather information.

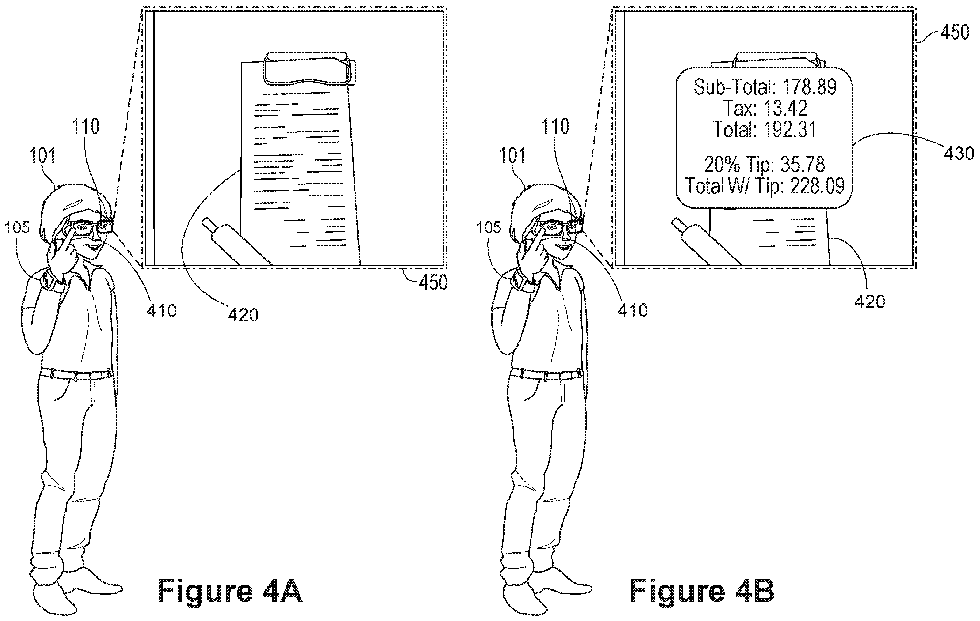

Figures 4A-4B illustrate the user 101 performing a user input 410 to cause the AI assistant to perform a set of tasks based on image data captured at the head-wearable device 110, in accordance with some embodiments. Figure 4A illustrates the user 101 performing the user input 410 while looking at a bill 420, in accordance with some embodiments. The user input 410 is a touch input (e.g., the user 101 touching a side of the head-wearable device 110, as illustrated in Figure 4A), a hand gesture (e.g., an index finger-double pinch gesture), and a voice command (e.g., "Help me out with this."). In some embodiments, the image data is image data of a point-of-view 450 of the user 101 captured at one or more forward-facing cameras of the head-wearable device 110. In response to the user 101 performing the user input 410, the AI assistant determines one or more tasks that the user 101 is requesting the AI assistant perform based on the image data. In some embodiments, the determination of the one or more tasks is further based on personalized user context associated with the user 101, location data, audio data captures at one or more microphones of the head-wearable device 110, textual data, attention cues, and/or a scene understanding. For example, as illustrated in Figure 4A, the AI assistant determines that the one or more tasks is calculating a tip for the bill 420, based on the user 101 looking at the bill 420 when the user 101 performs the user input 410.

Figure 4B illustrates the AI assistant presenting a touch input response 430 to the user 101 at the head-wearable device 110, in accordance with some embodiments. After the AI assistant determines the one or more tasks, the AI assistant performs the one or more tasks. In some embodiments, after performing the one or more tasks, the AI assistant presents the touch input 430 response based on the one or more tasks. The touch input response 430 is a visual touch input response (e.g., a UI element presented at the one or more displays of the head-wearable device 110) and/or an audio touch input response (e.g., an audio cue presented at the one or more speakers of the head-wearable device 110). For example, as illustrated in Figure 4B, the AI assistant causes a tip calculation UI to be presented to the user 101 in response to the user performing the user input 410 while looking at the bill 420.

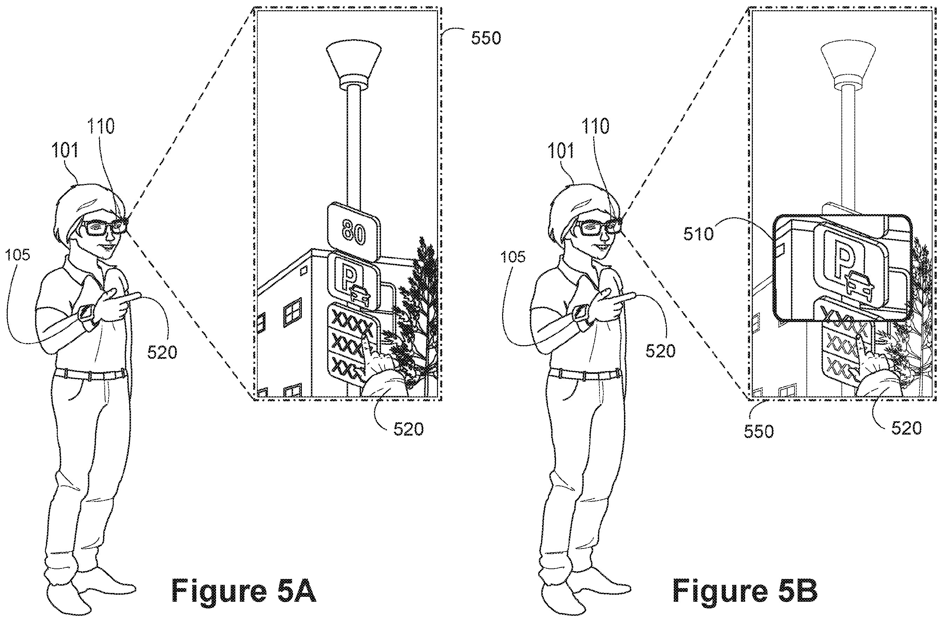

Figures 5A-5F illustrate silent user inputs that the user 101 performs to request the head-wearable device 110 to present a zoom-in UI 510 at the one or more displays of the head-wearable device 110, in accordance with some embodiments. Figure 5A illustrates the user 101 performing a point gesture 520 to cause the head-wearable device 110 to present a zoom-in UI 510, in accordance with some embodiments. The point gesture 520 is detected based on image data of the field-of-view 550 of the user 101 (e.g., by the one or more cameras of the head-wearable device 110) and/or biopotential data (e.g., IMU data captured at the IMU sensor of the wrist-wearable device 105 and/or EMG data captured at the EMG sensor of the wrist-wearable device 105). Figure 5B illustrates the head-wearable device 110 presenting the zoom-in UI 510 in response to the user 101 performing the point gesture 520, in accordance with some embodiments. The zoom-in UI 510 includes a selected portion of the image data that is zoomed-in (e.g., magnified). In some embodiments, the zoom-in UI 510 is presented over a location in the field-of-view 550 associated with the selected portion (e.g., the zoom-in UI 510 covers the zoomed-in location of the field-of-view 550), the zoom-in UI 510 is presented adjacent to the location in the field-of-view 550 associated with the selected portion (e.g., the zoom-in UI 510 is presented next to the zoomed-in location of the field-of-view 550, as illustrated in Figure 5B), and/or the zoom-in UI 510 is presented over a predetermined location in the field-of-view 550 (e.g., the zoom-in UI 510 is presented in a center position, a right-side, a bottom-left corner, etc. of the field-of-view 550). In some embodiments, the selected portion of the image data is a center of the field-of-view 550 of the user 101. In some embodiments, the selected portion of the image data is a portion of the field-of-view 550 that the point gesture 520 is directed at, as illustrated in Figures 5A-5B.

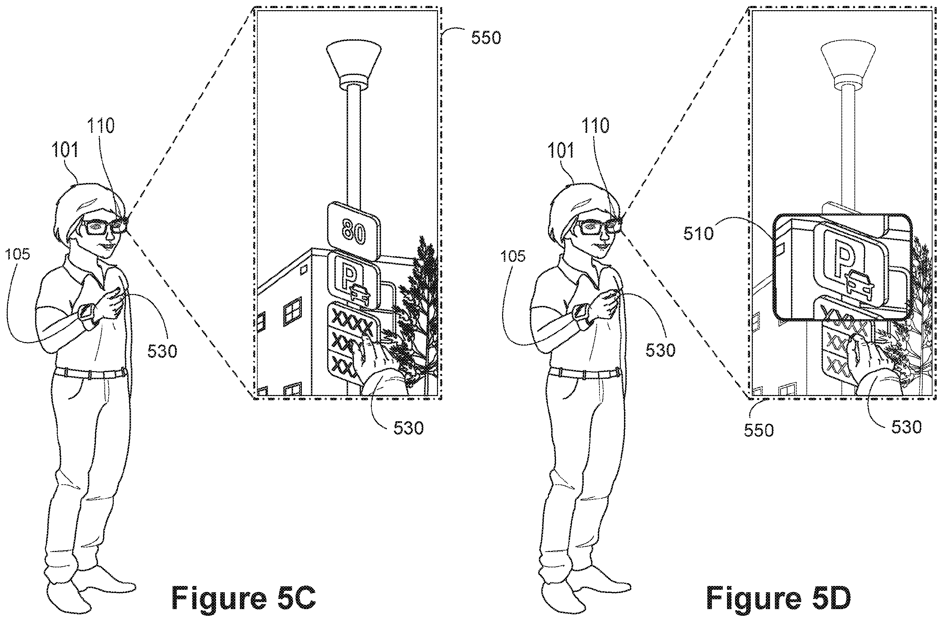

Figure 5C illustrates the user 101 performing a dial-twist gesture 530 (e.g., the user 101 pinching their thumb and finger(s) as if grabbing a dial) to cause the head-wearable device 110 to present the zoom-in UI 510, in accordance with some embodiments. The dial-twist gesture 530 is detected based on the image data of the field-of-view 550 of the user 101 and/or the biopotential data. Figure 5D illustrates the head-wearable device 110 presenting the zoom-in UI 510 in response to the user 101 performing the dial-twist gesture 530, in accordance with some embodiments. The zoom-in UI 510 includes the selected portion of the image data that is zoomed-in (e.g., magnified). In some embodiments, the selected portion of the image data is a portion of the field-of-view 550 that the dial-twist gesture 530 is directed at. In some embodiments, the user 101 twists their wrist in a first direction (e.g., clockwise), while continuing to perform the dial-twist gesture 530, to cause the zoom-in UI 510 to present the selected portion of the image data as further zoomed-in, and/or the user 101 twists their wrist in a second direction (e.g., counter-clockwise), while continuing to perform the dial-twist gesture 530, to cause the zoom-in UI 510 to present the selected portion of the image data as further zoomed-out (e.g., the user 101 twists their wrist while continuing to perform the dial-twist gesture 530 to vary a level of zoom of the zoom-in UI 510 on the selected portion of the image data).

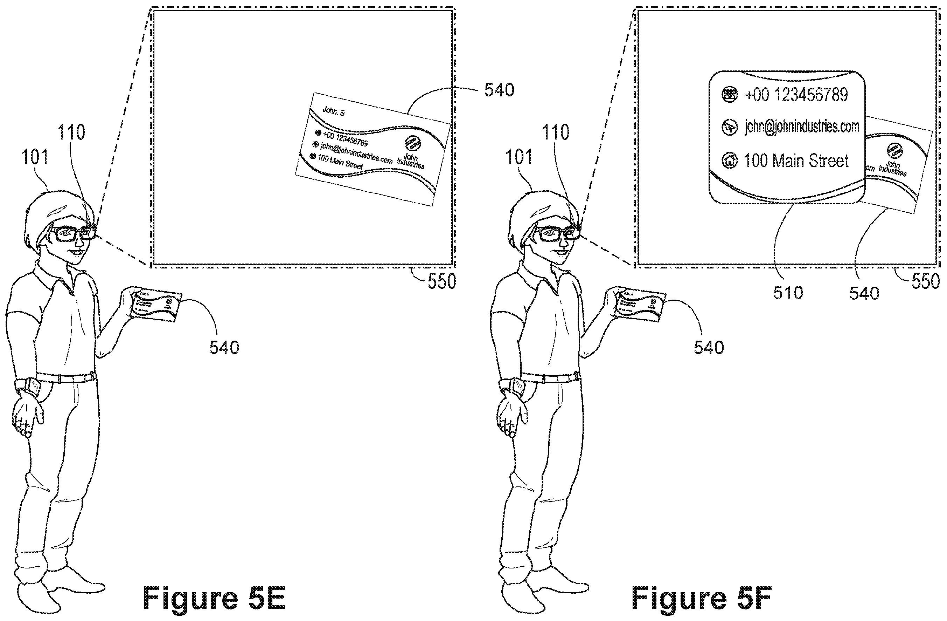

Figure 5E illustrates the user 101 holding an object of interest 540 (e.g., a business card) up to the head-wearable device 110 (e.g., up to the one or more cameras of the head-wearable device 110) to cause the head-wearable device 110 to present the zoom-in UI 510, in accordance with some embodiments. The user 101 holding the object of interest 540 up to the head-wearable device 110 is detected based on the image data of the field-of-view 550 of the user 101 and/or the biopotential data. Figure 5F illustrates the head-wearable device 110 presenting the zoom-in UI 510 in response to the user 101 holding the object of interest 540 up to the head-wearable device 110, in accordance with some embodiments. The zoom-in UI 510 includes the selected portion of the image data that is zoomed-in (e.g., magnified). The selected portion of the image data is a portion of the field-of-view 550 that includes the object of interest 540.

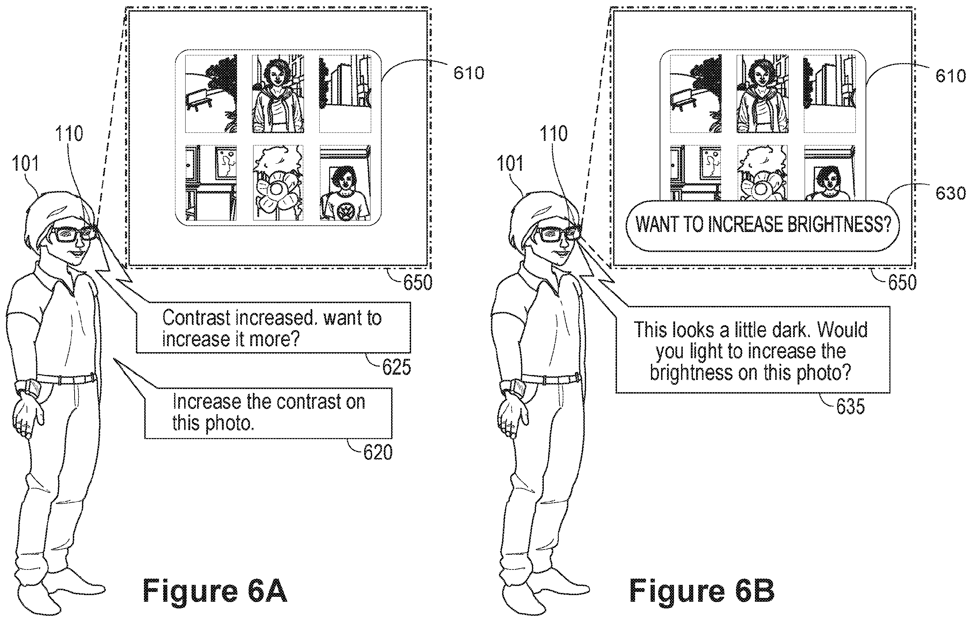

Figures 6A-6C illustrate the user 101 interacting with the AI assistant while viewing a photo gallery UI 610 presented at the head-wearable device 110, in accordance with some embodiments. In some embodiments, the one or more displays of the head-wearable device 110 present the photo gallery UI 610 in a field-of-view 650 of the user 101. The photo gallery UI 610 includes one or more photos associated with the user 101. Figure 6A illustrates the user 101 performing a photo edit voice command 620 (e.g., "Increase the contrast in this photo"), directed at the AI assistant, to request the AI assistant to perform one or more photo editing tasks (e.g., using the AI assistant to generate (e.g., requesting the AI assistant use one or more image generation techniques to generate one or more new images) the one or more photos in a different style (e.g., a cartoon style), cropping, blurring, unblurring, moving, adding, and/or erasing objects within a photo, denoising, writing, drawing, adding text, applying filters, changing brightness, changing tone, changing contrast, changing a black point, changing a white point, changing saturation, changing tint, etc.) to the one or more photos in the photo gallery UI 610. In response to the photo edit voice command 620, the AI assistant causes the one or more photo editing tasks to be performed on the one or more photos. In some embodiments, in response to the photo edit voice command 620, the AI assistant also causes photo edit confirmation 625 (e.g., "Contrast increased. Want to increase it more?") to be presented to the user 101. In some embodiments, in response to the photo edit voice command 620, the AI assistant cause an editing tool (e.g., a slider for adjusting a contrast of the one or more photos) associated with the one or more photo editing tasks to be displayed at the head-wearable device to allow the user 101 to control the one or more photo editing tasks with more granularity.

Figure 6B illustrates the AI assistant presenting a photo edit suggestion to the user 101 while the user 101 is interacting with the photo gallery UI 610, in accordance with some embodiments. The photo edit suggestion is a visual photo edit suggestion 630 (e.g., a UI element reading "Want to increase brightness?") presented at the one or more displays of the head-wearable device 110 and/or an audio photo edit suggestion 635 (e.g., "This looks a little dark. Would you like to increase the brightness of this photo?") presented at the one or more speakers of the head-wearable device 110. In some embodiments, the AI assistant determines the photo edit suggestion and one or more other photo editing tasks to be performed based on one or more qualities of the one or more photos in the photo gallery UI 610. In response to the user 101 accepting the photo edit suggestion (e.g., by performing an accept user input), the AI causes the one or more other photo editing tasks to be performed on the one or more photos. In response to the user 101 declining the photo edit suggestion (e.g., by performing a decline user input), the AI forgoes causing the one or more other photo editing tasks to be performed.

In some embodiments, the user 101 performs the photo edit voice command 620 and/or the AI assistant presents the photo edit suggestion to the user 101 after the user 101 has taken a photo at the head-wearable device 110 rather than while the user 101 is interacting with the photo gallery UI 610. For example, the user 101 takes a new photo using the one or more cameras of the head-wearable device 110, and immediately after performs another photo edit voice command (e.g., "Hey AI, please regenerate this picture of my friends in a cartoon style.") to request the AI assistant to perform one or more additional photo editing tasks to the new photo.

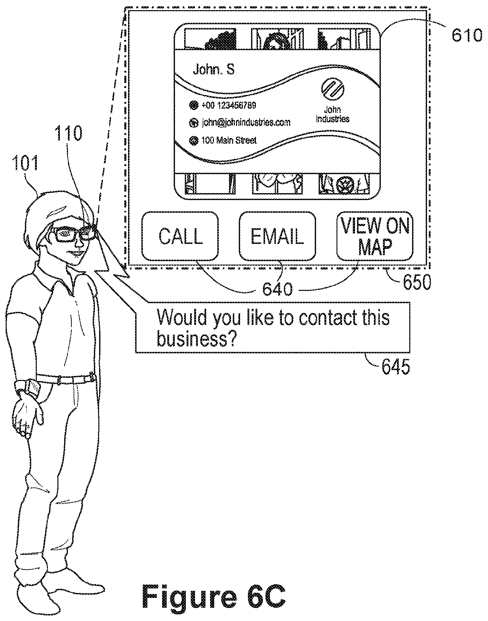

Figure 6C illustrates the AI assistant presenting a photo information-use suggestion to the user 101 while the user 101 is interacting with the photo gallery UI 610, in accordance with some embodiments. In some embodiments, the AI assistant determines the photo information-use suggestion and one or more information-use tasks (e.g., call a phone number, send an email, find a route to a location, etc.) to be performed based on one or more pieces of information (e.g., a phone number, an email address, and/or a street address on a business card, as illustrated in Figure 6C) within the one or more photos in the photo gallery UI 610. The photo information-use suggestion is a visual photo information-use suggestion 640 (e.g., a UI element reading "Call; Email; View on Map") presented at the one or more displays of the head-wearable device 110 and/or an audio photo information-use suggestion 645 (e.g., "Would you like to contact this business?") presented at the one or more speakers of the head-wearable device 110. In response to the user 101 accepting the photo information-use suggestion (e.g., by performing an accept user input), the AI causes the one or more information-use tasks to be performed. In response to the user 101 declining the photo information-use suggestion (e.g., by performing a decline user input), the AI forgoes causing the one or more information-use tasks to be performed.

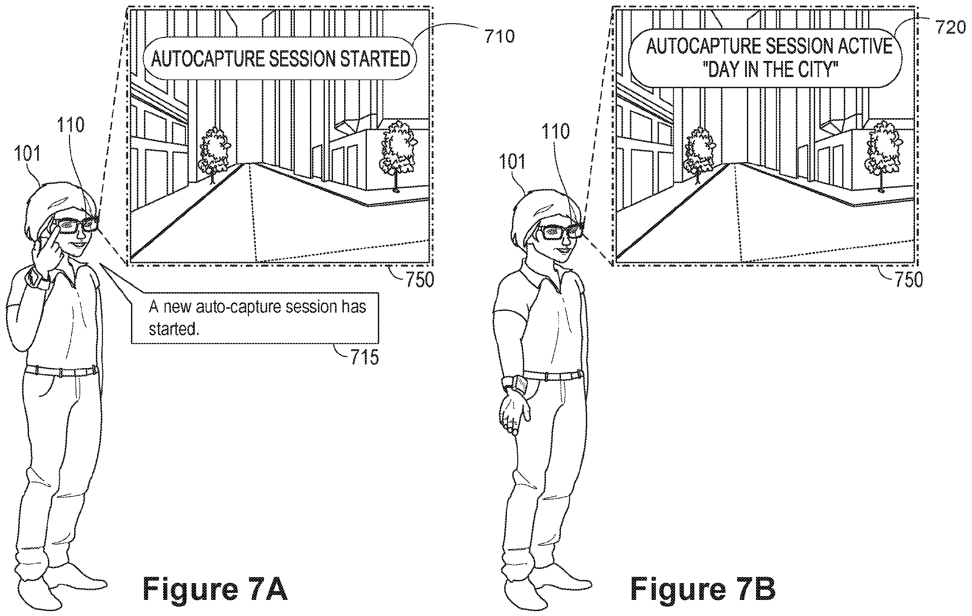

Figures 7A-7D illustrate the user 101 interacting with an auto-capture feature of the head-wearable device 110 during a session with the AI assistant, in accordance with some embodiments. Figure 7A illustrates the user 101 initiating an auto-capture session at the head-wearable device 110, in accordance with some embodiments. The user 101 initiates the auto-capture session by performing an auto-capture input (e.g., a touch input at a side of the head-wearable device 110, as illustrated in Figure 7A, a hand gesture, a voice command, a gaze gesture, etc.). In some embodiments, the user 101 performed the auto-capture input in response to an auto-capture suggestion (e.g., "Would you like to start an auto-capture session?") presented at the head-wearable device 110 by the AI assistant. In some embodiments, in response to the user 101 initiating the auto-capture session, the head-wearable device 110 presents an auto-capture initiation notification. 'The auto-capture initiation notification is a visual auto-capture initiation notification 710 (e.g., "Auto-Capture Session Started") presented in a field-of-view 750 of the user 101 by the one or more displays of the head-wearable device 110 and/or an audio auto-capture initiation notification 715 (e.g., "A new auto-capture session has started.") presented by the one or more speakers of the head-wearable device 110.

Figure 7B illustrates the user 101 interacting with the head-wearable device 110 while the auto-capture session is ongoing, in accordance with some embodiments. In some embodiments, while the auto-capture session is ongoing, the head-wearable device 110 presents an auto-capture in-progress notification 720 (e.g., "Auto-Capture Session Active; `Day in the City"') in the field-of-view 750 of the user 101 via the one or more displays of the head-wearable device 110. In some embodiments, the AI assistant determines a title of the auto-capture session (e.g., "Day in the City") based on image data and/or audio data captured since the auto-capture session was initiated. In some embodiments, the auto-capture in-progress notification 720 includes the title, as illustrated in Figure 7B.

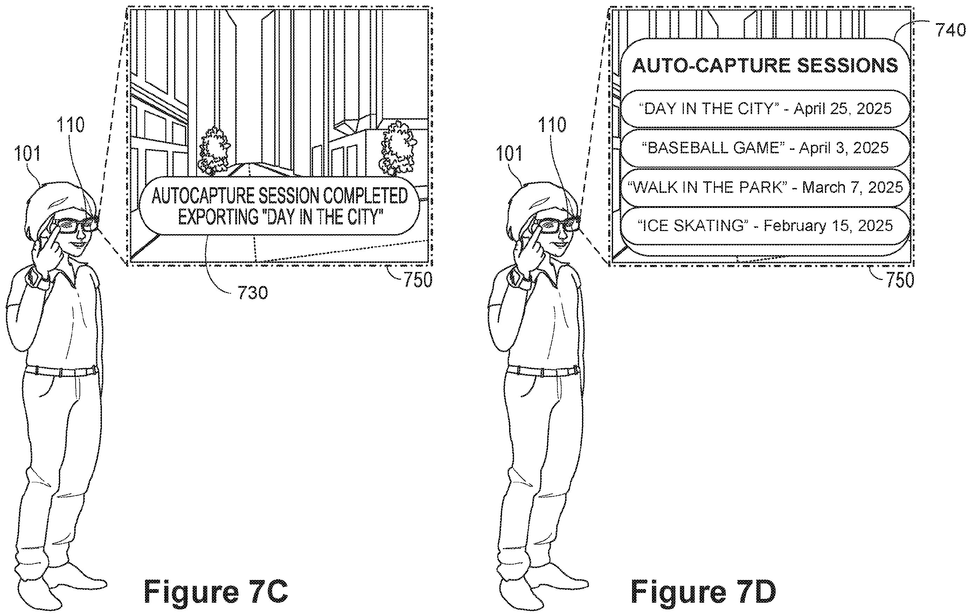

Figure 7C illustrates the user 101 interacting with the head-wearable device 110 as the auto-capture session terminates, in accordance with some embodiments. The auto-capture terminates in response to the user 101 performing an auto-capture termination input (e.g., a touch input at a side of the head-wearable device 110, a hand gesture, a voice command, a gaze gesture, etc.), in response to a predetermined period of time (e.g., thirty minutes) passing since the initiation of the auto-capture session, and/or in response to a determination, by the AI assistant, that the auto-capture session is complete. In some embodiments, in response to the auto-capture session terminating, the head-wearable device 110 presents an auto-capture termination notification 730 (e.g., "Auto-Capture Session Completed; Exporting 'Day in the City'") in the field-of-view 750 of the user 101 via the one or more displays of the head-wearable device 110. In some embodiments, the AI assistant determines the title of the auto-capture session (e.g., "Day in the City") based on image data and/or audio data captured over an entire course of the auto-capture session.

Figure 7D illustrates the user 101 interacting with an auto-capture UI 740 presented at the head-wearable device 110, in accordance with some embodiments. In some embodiments, the head-wearable device 110 presents the auto-capture UI 740 after the auto-capture session terminates. In some embodiments, the auto-capture UI 740 includes a plurality of previous auto-capture sessions (including the auto-capture session). In response to the user 101 selecting a respective auto-capture session of the plurality of previous auto-capture sessions, the head-wearable device 110 presents an auto-capture reel (e.g., a series of highlighted video clips, audio clips, and/or images taken during the respective auto-capture session) associated with the respective auto-capture session.

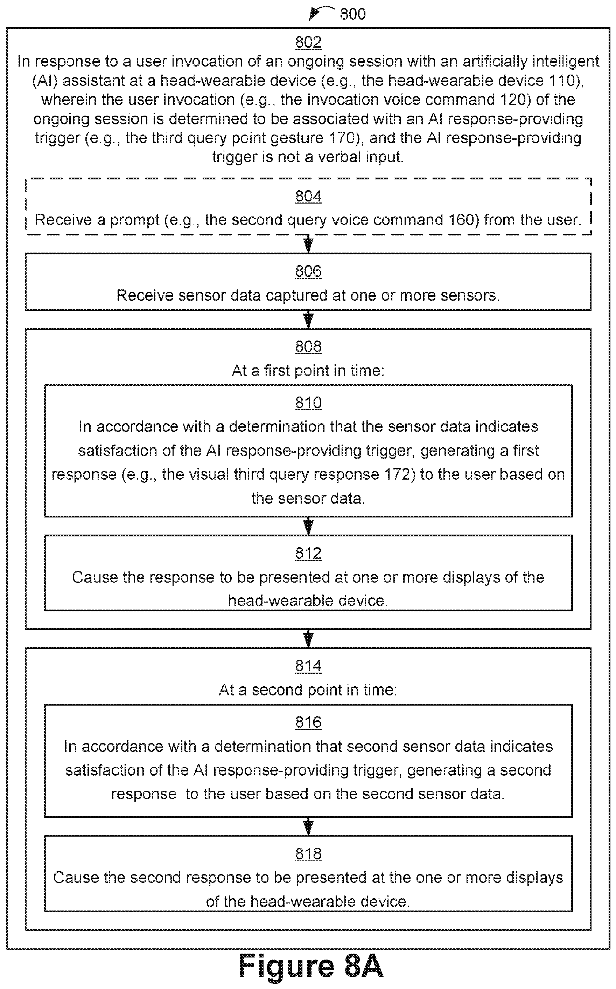

Figures 8A-8B illustrate flow diagrams for methods of user interactions with an AI assistant at a head-wearable device, in accordance with some embodiments. Operations (e.g., steps) of the method 800 and method 850 can be performed by one or more processors (e.g., central processing unit and/or MCU) of a system including a head-wearable device. At least some of the operations shown in Figures 8A-8B correspond to instructions stored in a computer memory or computer-readable storage medium (e.g., storage, RAM, and/or memory). Operations of the method 800 and the method 850 can be performed by a single device alone or in conjunction with one or more processors and/or hardware components of another communicatively coupled device (e.g., a head-wearable device) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(A1) Figure 8A shows a flow chart of a method 800 for providing AI assistant responses to a user in accordance with a determination that sensor data indicates satisfaction of an AI response-providing trigger, in accordance with some embodiments.

The method 800 occurs at a head-wearable device (e.g., the head-wearable device 110) with one or more sensors (e.g., one or more cameras, one or more microphones, one or more biopotential sensors, and/or one or more gaze-tracking devices) and/or one or more displays. In some embodiments, the method 800 is performed in response to a user invocation (e.g., the invocation voice command 120) of an ongoing session with an AI assistant (e.g., the session with the AI assistant as described in reference to Figures 1A-7D) at the head-wearable device, wherein the user invocation of the ongoing session is determined to be associated with an AI response-providing trigger (e.g., the third query point gesture 170), and the AI response-providing trigger is a non-verbal input performed by a user (e.g., the user 101) (802). The method 800 includes receiving sensor data (e.g., image data) captured at one or more sensors. In some embodiments, the AI response-providing trigger is not a verbal input The method 800 further includes, at a first point in time (808): (i) in accordance with a determination that the sensor data indicates satisfaction of the AI response-providing trigger, generating a first response (e.g., the visual third query response 172) to the user based on the sensor data (810) and (ii) causing the first response to be presented at one or more displays of the head-wearable device (812). The method 800 further includes, at a second point in time (814): (i) in accordance with a determination that second sensor data indicates satisfaction of the AI response-providing trigger, generating a second response to the user based on the second sensor data (816) and (ii) causing the second response to be presented at the one or more displays of the head-wearable device (818). In some embodiments, the second response is distinct from the first response

(A2) In some embodiments of A1, the method 800 further includes, in response to the user invocation of the ongoing session with the AI assistant at the head-wearable device and before receiving the sensor data captured at the one or more sensors of the head-wearable device, receiving a prompt (e.g., the second query voice command 160) from the user (804), wherein generating the response and generating the second response are further based on the prompt.

(A3) In some embodiments of any of A1-A2, the method 800 further includes, in response to the user invocation of the ongoing session with the AI assistant at the head-wearable device and in response to receiving the prompt from the user: (i) generating a prompt response (e.g., the second query response) to the user based on the prompt and (ii) causing the prompt response to be presented at the one or more displays of the head-wearable device.

(A4) In some embodiments of any of A1-A3, generating the second response is further based on the first response (e.g., context from the ongoing session with the AI assistant).

(A5) In some embodiments of any of A1-A4, the sensor data and the second sensor data are image data (e.g., camera data) and second image data (e.g., second camera data) captured at one or more cameras of the head-wearable device.

(A6) In some embodiments of any of A1-A5, the AI response-providing trigger is one or more point gestures performed by the user (e.g., as illustrated in Figure 1E).

(A7) In some embodiments of any of A1-A6, generating the response is further based on: (i) a point gesture of the one or more point gestures (e.g., the portobella mushrooms) that is directed at an object and (ii) the object. Generating the second response is further based on: (i) a second point gesture of the one or more point gestures that is directed at a second object and (ii) the second object.

(A8) In some embodiments of any of A1-A7, the AI response-providing trigger is one or more of one or more hand gestures, one or more gaze gestures, and/or one or more objects of interests identified in one of the sensor data and the second sensor data.

(A9) In some embodiments of any of A1-A8, generating the response and generating the second response are further based on a previous session with the AI assistant.

(A10) In some embodiments of any of A1-A9, the response includes a follow-up suggestion (e.g., the follow-up suggestion 174). The method 800 further includes, in response to the user invocation of the ongoing session with the AI assistant at the head-wearable device, at the first point in time, after causing the response to be presented at the one or more displays of the head-wearable device, and in response to receiving an indication (e.g., the selection input 180) that the user selected the follow-up suggestion: (i) generating a follow-up response (e.g., the visual suggestion response 182) to the user based on the follow-up suggestion and (ii) causing the follow-up response to be presented at the one or more displays of the head-wearable device.

(A11) In some embodiments of any of A1-A10, generating the follow-up response to the user is further based on one or more of the sensor data and the first response.

(A12) In some embodiments of any of A1-A11, the satisfaction of the AI response-providing trigger includes a determination that a user action is directed toward the AI assistant.

(A13) In some embodiments of any of A1-A12, the method 800 further includes, in response to the user invocation of the ongoing session with the AI assistant at the head-wearable device and at a third point in time, (i) in accordance with a determination that third sensor data indicates satisfaction of the AI response-providing trigger, generating a third response to the user based on the third sensor data and (ii) causing the third response to be presented at the one or more displays of the head-wearable device.

(A14) In some embodiments of any of A1-A13, the method 800 further includes receiving other sensor data captured at the one or more sensors. The method 800 further includes, at a fourth point in time: (i) in accordance with a determination that the other sensor data indicates satisfaction of the AI response-providing trigger, generating another response to the user based on the other sensor data and (ii) causing the other response to be presented at the one or more displays of the head-wearable device. The method 800 further includes, at a fifth point in time: (i) in accordance with a determination that additional sensor data indicates satisfaction of the AI response-providing trigger, generating an additional response to the user based on the additional sensor data and (ii) causing the additional response to be presented at the one or more displays of the head-wearable device.

(A15) In some embodiments of any of A1-A14, the first response includes one or more of (i) information related to one or more objects detected in the sensor data (e.g., the first example response described in reference to Figure 2A and/or the second example response described in reference to Figure 2B, the third example response described in reference to Figure 2C, the fourth example response described in reference to Figure 2D, and/or the fifth example response described in reference to Figure 2E), (ii) a translation of language detected in the sensor data (e.g., the sixth example response described in reference to Figure 2F), (iii) one or more pieces of information to complete one or more tasks associated with the sensor data (e.g., the seventh example response described in reference to Figure 2G), (iv) a suggestion to perform one or more tasks based on the sensor data (e.g., the first suggested task response 320, the second suggested task response 325, the third suggested task response 330, the fourth suggested task response 335, the fifth suggested task response 340, the sixth suggested task response 345, the seventh suggested task response 350, the eighth suggested task response 355, the ninth suggested task response 360, and/or the tenth suggested task response 365), (v) an output of one or more other tasks, determined by and performed by AI assistant based on the sensor data (e.g., the touch input response 430), (vi) a zoomed-in portion of the sensor data (e.g., the zoom-in UI 510), and (vii) a suggestion to modify one or more extended-reality (XR) augments presented at the head-wearable device (e.g., the photo edit suggestion, described in reference to Figure 6B).

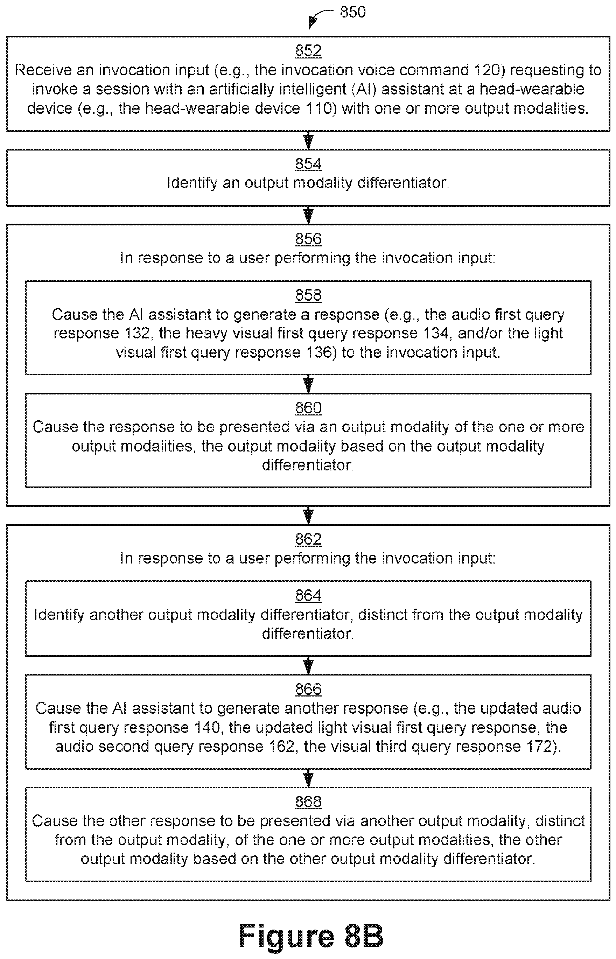

(B1) Figure 8B shows a flow chart of a method 850 for automatically switching output modalities of an AI assistant at a head-wearable device, in accordance with some embodiments.

The method 850 occurs at a head-wearable device (e.g., the head-wearable device 110) with one or more sensors (e.g., one or more cameras, one or more microphones, one or more biopotential sensors, and/or one or more gaze-tracking devices), one or more speakers, and/or one or more displays. In some embodiments, the method 850 includes receiving an invocation input (e.g., the invocation voice command 120 and/or the first query voice command 130) requesting to invoke a session with an AI assistant (e.g., the session with the AI assistant as described in reference to Figures 1A-7D) at the head-wearable device with one or more output modalities (e.g., one or more audio outputs (e.g., providing an audio response at one or more speakers of the head-wearable device 110) and/or one or more visual outputs (e.g., providing one or more visual responses at one or more display of the head-wearable device 110)) (852). The method 250 further includes identifying an output modality differentiator (e.g., based on the activity of the user 101, the location of the user 101, the input modality of the invocation input, etc.) (854). The method 850 further includes, in response to a user (e.g., the user 101) performing the invocation input (856): (i) causing the AI assistant to generate a response (e.g., the audio first query response 132, the heavy visual first query response 134, and/or the light visual first query response 136) to the invocation input (858) and (ii) causing the response to be presented via an output modality of the one or more output modalities, the output modality based on the output modality differentiator (860). The method 850 further includes, while the session with the AI assistant is ongoing (862): (i) identifying another output modality differentiator (e.g., based on the change of activity of the user 101, the change of location of the user 101, the change of input modality the user 101, etc.), distinct from the output modality differentiator, (864), (ii) causing the AI assistant to generate another response (e.g., the updated audio first query response 140, the updated light visual first query response, the audio second query response 162, the visual third query response 172) (866), and (iii) causing the other response to be presented via another output modality, distinct from the output modality, of the one or more output modalities, the other output modality based on the other output modality differentiator (868).

(B2) In some embodiments of B1, (i) the output modality differentiator is based on one or more of a location of the user, an activity of the user, and an input type of the invocation input, and (ii) the other output modality differentiator is based on one or more of another location of the user, another activity of the user, and another input type of another user input.

(B3) In some embodiments of any of B1-B2, the input type and the other input type include one or more of one or more voice commands, one or more hand gestures, one or more point gestures, one or more touch gestures, and one or more gaze gestures.

(B4) In some embodiments of any of B1-B3, (i) the output modality differentiator is further based on one or more of one or more previous outputs, calendar information, one or more user preferences, an amount of background noise, a time-of-day, privacy information, an amount of information to be presented in the response, and (ii) the other output modality differentiator is further based on one or more of one or more other previous outputs, the calendar information, the one or more user preferences, another amount of background noise, another time-of-day, other privacy information, another amount of information to be presented in the other response.

(B5) In some embodiments of any of B1-B4, identifying the other output modality differentiator is in response to one or more of a change of location of the user, a change of activity of the user, and a change of input type of the of the user.

(B6) In some embodiments of any of B1-B5, the one or more output modalities include: (i) an audio output modality wherein one or more audio responses are presented at one or more speakers of the head-wearable device and (ii) a visual output modality wherein one or more visual elements are presented at one or more displays of the head-wearable device.

(B7) In some embodiments of any of B1-B6, the visual output modality includes presenting the one or more XR elements with one or more images.

(B8) In some embodiments of any of B1-B7, receiving the invocation input requesting to invoke the session with the AI assistant includes a determination that a user action is the invocation input directed toward the AI assistant.

(B9) In some embodiments of any of B1-B8, the method 850 further includes while the session with the AI assistant is ongoing and before identifying the other output modality differentiator, receiving an additional user input of an additional input type performed by the user. The other output modality differentiator is based on the additional input type, and the other response is based on the additional user input.

(B10) In some embodiments of any of B1-B9, the other response is based on the response.

(B11) In some embodiments of any of B1-B10, the method 850 further includes, while the session with the AI assistant is ongoing: (i) identifying a third output modality differentiator, distinct from the other output modality differentiator, (ii) causing the AI assistant to generate a third response, and (iii) causing the third response to be presented via the output modality of the one or more output modalities. The output modality based on the third output modality differentiator.

(B12) In some embodiments of any of B1-B11, the method 850 further includes, while the session with the AI assistant is ongoing: (i) identifying a fourth output modality differentiator, distinct from the output modality differentiator and the other output modality differentiator, (ii) causing the AI assistant to generate a fourth response, and (iii) causing the fourth response to be presented via a fourth output modality of the one or more output modalities. The fourth output modality based on the fourth output modality differentiator.

(B13) In some embodiments of any of B1-B12, the method 850 further includes, in response to the user performing the invocation input, after causing the response to be presented via the output modality of the one or more output modalities, and in response to receiving a fifth user input from the user: (i) causing the AI assistant to generate a fifth response to the fifth input and (ii) causing the fifth response to be presented via the output modality of the one or more output modalities.

(B14) In some embodiments of any of B1-B13, the method 850 further includes, while the session with the AI assistant is ongoing, after causing the other response to be presented via the other output modality of the one or more output modalities, and in response to receiving a sixth user input from the user: (i) causing the AI assistant to generate a sixth response to the sixth input and (ii) causing the sixth response to be presented via the other output modality of the one or more output modalities.

(C1) In accordance with some embodiments, a system that includes one or more wrist wearable devices and a pair of augmented-reality glasses, and the system is configured to perform operations corresponding to any of A1-B14.

(D1) In accordance with some embodiments, a non-transitory computer readable storage medium including instructions that, when executed by a computing device in communication with a pair of augmented-reality glasses, cause the computer device to perform operations corresponding to any of A1-B14.

(E1) In accordance with some embodiments, a wearable device (e.g., a head-wearable device) configured to perform or cause performance of operations that correspond to any of A1-B14.

(F1) In accordance with some embodiments, an intermediary processing device (e.g., configured to offload processing operations for a head-worn device such as Augmented Reality glasses) configured to perform or cause performance of operations that correspond to any of A1-B14.

The devices described above are further detailed below, including wrist-wearable devices, headset devices, systems, and haptic feedback devices. Specific operations described above may occur as a result of specific hardware, such hardware is described in further detail below. The devices described below are not limiting and features on these devices can be removed or additional features can be added to these devices.

### Example Extended-Reality Systems

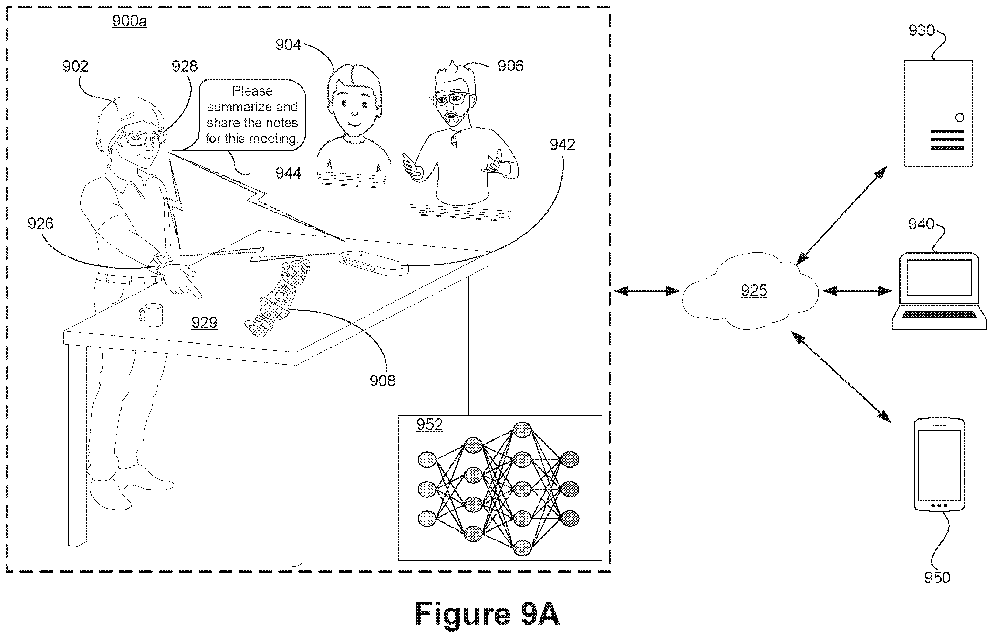

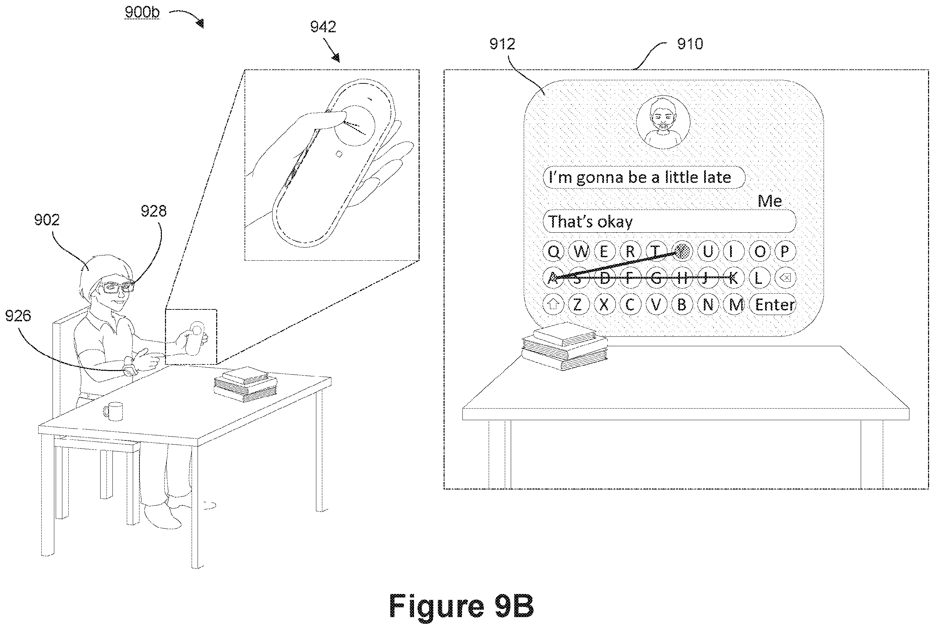

Figures 9A, 9B, 9C-1, and 9C-2, illustrate example XR systems that include AR and MR systems, in accordance with some embodiments. Figure 9A shows a first XR system 900a and first example user interactions using a wrist-wearable device 326, a head-wearable device (e.g., AR device 928), and/or a HIPD 942. Figure 9B shows a second XR system 900b and second example user interactions using a wrist-wearable device 926, AR device 928, and/or an HIPD 942. Figures 9C-1 and 9C-2 show a third MR system 900c and third example user interactions using a wrist-wearable device 926, a head-wearable device (e.g., an MR device such as a VR device), and/or an HIPD 942. As the skilled artisan will appreciate upon reading the descriptions provided herein, the above-example AR and MR systems (described in detail below) can perform various functions and/or operations.

The wrist-wearable device 926, the head-wearable devices, and/or the HIPD 942 can communicatively couple via a network 925 (e.g., cellular, near field, Wi-Fi, personal area network, wireless LAN). Additionally, the wrist-wearable device 926, the head-wearable device, and/or the HIPD 942 can also communicatively couple with one or more servers 930, computers 940 (e.g., laptops, computers), mobile devices 950 (e.g., smartphones, tablets), and/or other electronic devices via the network 925 (e.g., cellular, near field, Wi-Fi, personal area network, wireless LAN). Similarly, a smart textile-based garment, when used, can also communicatively couple with the wrist-wearable device 926, the head-wearable device(s), the HIPD 942, the one or more servers 930, the computers 940, the mobile devices 950, and/or other electronic devices via the network 925 to provide inputs.

Turning to Figure 9A, a user 902 is shown wearing the wrist-wearable device 926 and the AR device 928 and having the HIPD 942 on their desk. The wrist-wearable device 926, the AR device 928, and the HIPD 942 facilitate user interaction with an AR environment. In particular, as shown by the first AR system 900a, the wrist-wearable device 926, the AR device 928, and/or the HIPD 942 cause presentation of one or more avatars 904, digital representations of contacts 906, and virtual objects 908. As discussed below, the user 902 can interact with the one or more avatars 904, digital representations of the contacts 906, and virtual objects 908 via the wrist-wearable device 926, the AR device 928, and/or the HIPD 942. In addition, the user 902 is also able to directly view physical objects in the environment, such as a physical table 929, through transparent lens(es) and waveguide(s) of the AR device 928. Alternatively, an MR device could be used in place of the AR device 928 and a similar user experience can take place, but the user would not be directly viewing physical objects in the environment, such as table 929, and would instead be presented with a virtual reconstruction of the table 929 produced from one or more sensors of the MR device (e.g., an outward facing camera capable of recording the surrounding environment).

The user 902 can use any of the wrist-wearable device 926, the AR device 928 (e.g., through physical inputs at the AR device and/or built-in motion tracking of a user's extremities), a smart-textile garment, externally mounted extremity tracking device, the HIPD 942 to provide user inputs, etc. For example, the user 902 can perform one or more hand gestures that are detected by the wrist-wearable device 926 (e.g., using one or more EMG sensors and/or IMUs built into the wrist-wearable device) and/or AR device 928 (e.g., using one or more image sensors or cameras) to provide a user input. Alternatively, or additionally, the user 902 can provide a user input via one or more touch surfaces of the wrist-wearable device 926, the AR device 928, and/or the HIPD 942, and/or voice commands captured by a microphone of the wrist-wearable device 926, the AR device 928, and/or the HIPD 942. The wrist-wearable device 926, the AR device 928, and/or the HIPD 942 include an artificially intelligent digital assistant to help the user in providing a user input (e.g., completing a sequence of operations, suggesting different operations or commands, providing reminders, confirming a command). For example, the digital assistant can be invoked through an input occurring at the AR device 928 (e.g., via an input at a temple arm of the AR device 928). In some embodiments, the user 902 can provide a user input via one or more facial gestures and/or facial expressions. For example, cameras of the wrist-wearable device 926, the AR device 928, and/or the HIPD 942 can track the user 902's eyes for navigating a user interface.

The wrist-wearable device 926, the AR device 928, and/or the HIPD 942 can operate alone or in conjunction to allow the user 902 to interact with the AR environment. In some embodiments, the HIPD 942 is configured to operate as a central hub or control center for the wrist-wearable device 926, the AR device 928, and/or another communicatively coupled device. For example, the user 902 can provide an input to interact with the AR environment at any of the wrist-wearable device 926, the AR device 928, and/or the HIPD 942, and the HIPD 942 can identify one or more back-end and front-end tasks to cause the performance of the requested interaction and distribute instructions to cause the performance of the one or more back-end and front-end tasks at the wrist-wearable device 926, the AR device 928, and/or the HIPD 942. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 942 can perform the back-end tasks and provide the wrist-wearable device 926 and/or the AR device 928 operational data corresponding to the performed back-end tasks such that the wrist-wearable device 926 and/or the AR device 928 can perform the front-end tasks. In this way, the HIPD 942, which has more computational resources and greater thermal headroom than the wrist-wearable device 926 and/or the AR device 928, performs computationally intensive tasks and reduces the computer resource utilization and/or power usage of the wrist-wearable device 926 and/or the AR device 928.

In the example shown by the first AR system 900a, the HIPD 942 identifies one or more back-end tasks and front-end tasks associated with a user request to initiate an AR video call with one or more other users (represented by the avatar 904 and the digital representation of the contact 906) and distributes instructions to cause the performance of the one or more back-end tasks and front-end tasks. In particular, the HIPD 942 performs back-end tasks for processing and/or rendering image data (and other data) associated with the AR video call and provides operational data associated with the performed back-end tasks to the AR device 928 such that the AR device 928 performs front-end tasks for presenting the AR video call (e.g., presenting the avatar 904 and the digital representation of the contact 906).

In some embodiments, the HIPD 942 can operate as a focal or anchor point for causing the presentation of information. This allows the user 902 to be generally aware of where information is presented. For example, as shown in the first AR system 900a, the avatar 904 and the digital representation of the contact 906 are presented above the HIPD 942. In particular, the HIPD 942 and the AR device 928 operate in conjunction to determine a location for presenting the avatar 904 and the digital representation of the contact 906. In some embodiments, information can be presented within a predetermined distance from the HIPD 942 (e.g., within five meters). For example, as shown in the first AR system 900a, virtual object 908 is presented on the desk some distance from the HIPD 942. Similar to the above example, the HIPD 942 and the AR device 928 can operate in conjunction to determine a location for presenting the virtual object 908. Alternatively, in some embodiments, presentation of information is not bound by the HIPD 942. More specifically, the avatar 904, the digital representation of the contact 906, and the virtual object 908 do not have to be presented within a predetermined distance of the HIPD 942. While an AR device 928 is described working with an HIPD, an MR headset can be interacted with in the same way as the AR device 928.

User inputs provided at the wrist-wearable device 926, the AR device 928, and/or the HIPD 942 are coordinated such that the user can use any device to initiate, continue, and/or complete an operation. For example, the user 902 can provide a user input to the AR device 928 to cause the AR device 928 to present the virtual object 908 and, while the virtual object 908 is presented by the AR device 928, the user 902 can provide one or more hand gestures via the wrist-wearable device 926 to interact and/or manipulate the virtual object 908. While an AR device 928 is described working with a wrist-wearable device 926, an MR headset can be interacted with in the same way as the AR device 928.

### Integration of Artificial Intelligence with XR Systems

Figure 9A illustrates an interaction in which an artificially intelligent virtual assistant can assist in requests made by a user 902. The AI virtual assistant can be used to complete open-ended requests made through natural language inputs by a user 902. For example, in Figure 9A the user 902 makes an audible request 944 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 9A also illustrates an example neural network 952 used in Artificial Intelligence applications. Uses of Artificial Intelligence (AI) are varied and encompass many different aspects of the devices and systems described herein. AI capabilities cover a diverse range of applications and deepen interactions between the user 902 and user devices (e.g., the AR device 928, an MR device 932, the HIPD 942, the wrist-wearable device 926). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 902 can interact with an AI model through natural language inputs captured by a voice sensor, text inputs, or any other input modality that accepts natural language and/or a corresponding voice sensor module. In another instance, input is provided by tracking the eye gaze of a user 902 via a gaze tracker module. Additionally, the AI model can also receive inputs beyond those supplied by a user 902. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 928) or from multiple devices that are in communication with each other (e.g., a system that includes at least two of an AR device 928, an MR device 932, the HIPD 942, the wrist-wearable device 926, etc.). The AI model can also access additional information (e.g., one or more servers 930, the computers 940, the mobile devices 950, and/or other electronic devices) via a network 925.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 928, an MR device 932, the HIPD 942, the wrist-wearable device 926) via the one or more networks. The cloud-computing platforms provide scalable computing resources, distributed computing, managed AI services, interference acceleration, pre-trained models, APIs, and/or other resources to support comprehensive computations required by the Al-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 928, an MR device 932, the HIPD 942, the wrist-wearable device 926), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 942), haptic feedback can provide information to the user 902. An AI model can also use the inputs described above to determine the appropriate modality and device(s) to present content to the user (e.g., a user walking on a busy road can be presented with an audio output instead of a visual output to avoid distracting the user 902).

### Example Augmented Reality Interaction

Figure 9B shows the user 902 wearing the wrist-wearable device 926 and the AR device 928 and holding the HIPD 942. In the second AR system 900b, the wrist-wearable device 926, the AR device 928, and/or the HIPD 942 are used to receive and/or provide one or more messages to a contact of the user 902. In particular, the wrist-wearable device 926, the AR device 928, and/or the HIPD 942 detect and coordinate one or more user inputs to initiate a messaging application and prepare a response to a received message via the messaging application.

In some embodiments, the user 902 initiates, via a user input, an application on the wrist-wearable device 926, the AR device 928, and/or the HIPD 942 that causes the application to initiate on at least one device. For example, in the second AR system 900b the user 902 performs a hand gesture associated with a command for initiating a messaging application (represented by messaging user interface 912); the wrist-wearable device 926 detects the hand gesture; and, based on a determination that the user 902 is wearing the AR device 928, causes the AR device 928 to present a messaging user interface 912 of the messaging application. The AR device 928 can present the messaging user interface 912 to the user 902 via its display (e.g., as shown by user 902's field of view 910). In some embodiments, the application is initiated and can be run on the device (e.g., the wrist-wearable device 926, the AR device 928, and/or the HIPD 942) that detects the user input to initiate the application, and the device provides another device operational data to cause the presentation of the messaging application. For example, the wrist-wearable device 926 can detect the user input to initiate a messaging application, initiate and run the messaging application, and provide operational data to the AR device 928 and/or the HIPD 942 to cause presentation of the messaging application. Alternatively, the application can be initiated and run at a device other than the device that detected the user input. For example, the wrist-wearable device 926 can detect the hand gesture associated with initiating the messaging application and cause the HIPD 942 to run the messaging application and coordinate the presentation of the messaging application.

Further, the user 902 can provide a user input provided at the wrist-wearable device 926, the AR device 928, and/or the HIPD 942 to continue and/or complete an operation initiated at another device. For example, after initiating the messaging application via the wrist-wearable device 926 and while the AR device 928 presents the messaging user interface 912, the user 902 can provide an input at the HIPD 942 to prepare a response (e.g., shown by the swipe gesture performed on the HIPD 942). The user 902's gestures performed on the HIPD 942 can be provided and/or displayed on another device. For example, the user 902's swipe gestures performed on the HIPD 942 are displayed on a virtual keyboard of the messaging user interface 912 displayed by the AR device 928.

In some embodiments, the wrist-wearable device 926, the AR device 928, the HIPD 942, and/or other communicatively coupled devices can present one or more notifications to the user 902. The notification can be an indication of a new message, an incoming call, an application update, a status update, etc. The user 902 can select the notification via the wrist-wearable device 926, the AR device 928, or the HIPD 942 and cause presentation of an application or operation associated with the notification on at least one device. For example, the user 902 can receive a notification that a message was received at the wrist-wearable device 926, the AR device 928, the HIPD 942, and/or other communicatively coupled device and provide a user input at the wrist-wearable device 926, the AR device 928, and/or the HIPD 942 to review the notification, and the device detecting the user input can cause an application associated with the notification to be initiated and/or presented at the wrist-wearable device 926, the AR device 928, and/or the HIPD 942.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 928 can present to the user 902 game application data and the HIPD 942 can use a controller to provide inputs to the game. Similarly, the user 902 can use the wrist-wearable device 926 to initiate a camera of the AR device 928, and the user can use the wrist-wearable device 926, the AR device 928, and/or the HIPD 942 to manipulate the image capture (e.g., zoom in or out, apply filters) and capture image data.

While an AR device 928 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 9C-1 and 9C-2, the user 902 is shown wearing the wrist-wearable device 926 and an MR device 932 (e.g., a device capable of providing either an entirely VR experience or an MR experience that displays object(s) from a physical environment at a display of the device) and holding the HIPD 942. In the third AR system 900c, the wrist-wearable device 926, the MR device 932, and/or the HIPD 942 are used to interact within an MR environment, such as a VR game or other MR/VR application. While the MR device 932 presents a representation of a VR game (e.g., first MR game environment 920) to the user 902, the wrist-wearable device 926, the MR device 932, and/or the HIPD 942 detect and coordinate one or more user inputs to allow the user 902 to interact with the VR game.

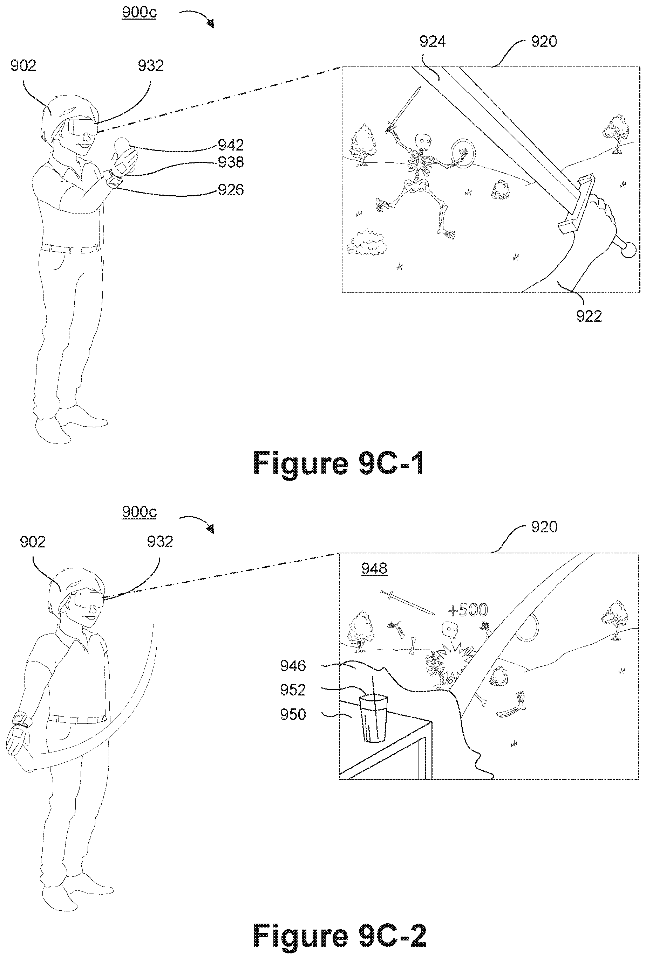

In some embodiments, the user 902 can provide a user input via the wrist-wearable device 926, the MR device 932, and/or the HIPD 942 that causes an action in a corresponding MR environment. For example, the user 902 in the third MR system 900c (shown in Figure 9C-1) raises the HIPD 942 to prepare for a swing in the first MR game environment 920. The MR device 932, responsive to the user 902 raising the HIPD 942, causes the MR representation of the user 922 to perform a similar action (e.g., raise a virtual object, such as a virtual sword 924). In some embodiments, each device uses respective sensor data and/or image data to detect the user input and provide an accurate representation of the user 902's motion. For example, image sensors (e.g., SLAM cameras or other cameras) of the HIPD 942 can be used to detect a position of the HIPD 942 relative to the user 902's body such that the virtual object can be positioned appropriately within the first MR game environment 920; sensor data from the wrist-wearable device 926 can be used to detect a velocity at which the user 902 raises the HIPD 942 such that the MR representation of the user 922 and the virtual sword 924 are synchronized with the user 902's movements; and image sensors of the MR device 932 can be used to represent the user 902's body, boundary conditions, or real-world objects within the first MR game environment 920.

In Figure 9C-2, the user 902 performs a downward swing while holding the HIPD 942. The user 902's downward swing is detected by the wrist-wearable device 926, the MR device 932, and/or the HIPD 942 and a corresponding action is performed in the first MR game environment 920. In some embodiments, the data captured by each device is used to improve the user's experience within the MR environment. For example, sensor data of the wrist-wearable device 926 can be used to determine a speed and/or force at which the downward swing is performed and image sensors of the HIPD 942 and/or the MR device 932 can be used to determine a location of the swing and how it should be represented in the first MR game environment 920, which, in turn, can be used as inputs for the MR environment (e.g., game mechanics, which can use detected speed, force, locations, and/or aspects of the user 902's actions to classify a user's inputs (e.g., user performs a light strike, hard strike, critical strike, glancing strike, miss) or calculate an output (e.g., amount of damage)).

Figure 9C-2 further illustrates that a portion of the physical environment is reconstructed and displayed at a display of the MR device 932 while the MR game environment 920 is being displayed. In this instance, a reconstruction of the physical environment 946 is displayed in place of a portion of the MR game environment 920 when object(s) in the physical environment are potentially in the path of the user (e.g., a collision with the user and an object in the physical environment are likely). Thus, this example MR game environment 920 includes (i) an immersive VR portion 948 (e.g., an environment that does not have a corollary counterpart in a nearby physical environment) and (ii) a reconstruction of the physical environment 946 (e.g., table 950 and cup 952). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 926, the MR device 932, and/or the HIPD 942 are described as detecting user inputs, in some embodiments, user inputs are detected at a single device (with the single device being responsible for distributing signals to the other devices for performing the user input). For example, the HIPD 942 can operate an application for generating the first MR game environment 920 and provide the MR device 932 with corresponding data for causing the presentation of the first MR game environment 920, as well as detect the user 902's movements (while holding the HIPD 942) to cause the performance of corresponding actions within the first MR game environment 920. Additionally or alternatively, in some embodiments, operational data (e.g., sensor data, image data, application data, device data, and/or other data) of one or more devices is provided to a single device (e.g., the HIPD 942) to process the operational data and cause respective devices to perform an action associated with processed operational data.

In some embodiments, the user 902 can wear a wrist-wearable device 926, wear an MR device 932, wear smart textile-based garments 938 (e.g., wearable haptic gloves), and/or hold an HIPD 942 device. In this embodiment, the wrist-wearable device 926, the MR device 932, and/or the smart textile-based garments 938 are used to interact within an MR environment (e.g., any AR or MR system described above in reference to Figures 9A-9B). While the MR device 932 presents a representation of an MR game (e.g., second MR game environment 920) to the user 902, the wrist-wearable device 926, the MR device 932, and/or the smart textile-based garments 938 detect and coordinate one or more user inputs to allow the user 902 to interact with the MR environment.

In some embodiments, the user 902 can provide a user input via the wrist-wearable device 926, an HIPD 942, the MR device 932, and/or the smart textile-based garments 938 that causes an action in a corresponding MR environment. In some embodiments, each device uses respective sensor data and/or image data to detect the user input and provide an accurate representation of the user 902's motion. While four different input devices are shown (e.g., a wrist-wearable device 926, an MR device 932, an HIPD 942, and a smart textile-based garment 938) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 938) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 938 can be used in conjunction with an MR device and/or an HIPD 942.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 9A-9C-2 provided above are intended to augment the description provided in reference to Figures 1A-2B. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A non-transitory, computer-readable storage medium comprising executable instructions that, when executed by one or more processors, cause the one or more processors to:
in response to a user invocation of an ongoing session with an artificially intelligent (AI) assistant at a head-wearable device by a user, wherein the user invocation of the ongoing session is determined to be associated with an Al response-providing trigger, and the AI response-providing trigger is not a verbal input:
receive sensor data captured at one or more sensors;
at a first point in time:
in accordance with a determination that first sensor data indicates satisfaction of the AI response-providing trigger, generate a first response to the user based on the first sensor data; and
cause the first response to be presented at one or more displays of the head-wearable device;
at a second point in time:
in accordance with a determination that second sensor data indicates satisfaction of the AI response-providing trigger, generate a second response, distinct from the first response, to the user based on the second sensor data; and
cause the second response to be presented at the one or more displays of the head-wearable device.

2. The non-transitory, computer-readable storage medium of claim 1, wherein the executable instructions further cause the one or more processors to:
in response to the user invocation of the ongoing session with the AI assistant at the head-wearable device:
before receiving the sensor data captured at the one or more sensors of the head-wearable device, receive a prompt from the user, wherein generating the first response and generating the second response are further based on the prompt;
optionally, wherein the executable instructions further cause the one or more processors to:
in response to the user invocation of the ongoing session with the AI assistant at the head-wearable device:
in response to receiving the prompt from the user:
generate a prompt response to the user based on the prompt; and
cause the prompt response to be presented at the one or more displays of the head-wearable device.

3. The non-transitory, computer-readable storage medium of claim 1 or claim 2, and one or more of the following:
(i) wherein generating the second response is further based on the first response;
(ii) wherein:
the sensor data is image data captured at one or more cameras of the head-wearable device at the first point in time; and
the second sensor data is second image data captured at one or more cameras of the head-wearable device at the second point in time.

4. The non-transitory, computer-readable storage medium of any preceding claim, wherein the AI response-providing trigger is one or more point gestures performed by the user;
optionally, wherein:
generating the first response is further based on:
a point gesture of the one or more point gestures that is directed at an object; and
the object; and
generating the second response is further based on:
a second point gesture of the one or more point gestures that is directed at a second object; and
the second object.

5. The non-transitory, computer-readable storage medium of any preceding claim, and one or more of the following:
(i) wherein the Al response-providing trigger is one or more of one or more hand gestures, one or more gaze gestures, and one or more objects of interest identified in one of the sensor data and the second sensor data;
(ii) wherein generating the first response and generating the second response are further based on a previous session with the Al assistant at the head-wearable device.

6. The non-transitory, computer-readable storage medium of any preceding claim, wherein:
the first response comprises a follow-up suggestion; and
the executable instructions further cause the one or more processors to:
in response to the user invocation of the ongoing session with the AI assistant at the head-wearable device and at the first point in time:
after causing the first response to be presented at the one or more displays of the head-wearable device and in response to receiving an indication that the user selected the follow-up suggestion:
generate a follow-up response to the user based on the follow-up suggestion; and
cause the follow-up response to be presented at the one or more displays of the head-wearable device;
optionally, wherein generating the follow-up response to the user is further based on one or more of the sensor data and the first response.

7. The non-transitory, computer-readable storage medium of any preceding claim, wherein the satisfaction of the AI response-providing trigger comprises a determination that a user action is directed toward the Al assistant.

8. The non-transitory, computer-readable storage medium of any preceding claim, wherein the executable instructions further cause the one or more processors to:
in response to the user invocation of the ongoing session with the AI assistant at the head-wearable device:
at a third point in time:
in accordance with a determination that third sensor data indicates satisfaction of the AI response-providing trigger, generate a third response to the user based on the third sensor data; and
cause the third response to be presented at the one or more displays of the head-wearable device.

9. The non-transitory, computer-readable storage medium of any preceding claim, wherein the executable instructions further cause the one or more processors to:
in response to the user invocation of the ongoing session with the AI assistant at the head-wearable device, wherein the user invocation of the ongoing session is determined to be associated with another Al response-providing trigger, and the other AI response-providing trigger comprises a verbal input:
at a fourth point in time:
in accordance with a determination that fourth sensor data indicates satisfaction of the other Al response-providing trigger, generate a fourth response to the user based on the fourth sensor data; and
cause the fourth response to be presented at the one or more displays of the head-wearable device.

10. The non-transitory, computer-readable storage medium of any preceding claim, wherein the executable instructions further cause the one or more processors to:
in response to another user invocation of another ongoing session with the Al assistant at the head-wearable device, wherein the other user invocation of the ongoing session is determined to be associated with the Al response-providing trigger:
receive other sensor data captured at the one or more sensors;
at a fourth point in time:
in accordance with a determination that the other sensor data indicates satisfaction of the Al response-providing trigger, generate another response to the user based on the other sensor data; and
cause the other response to be presented at the one or more displays of the head-wearable device;
at a fifth point in time:
in accordance with a determination that additional sensor data indicates satisfaction of the Al response-providing trigger, generate an additional response to the user based on the additional sensor data; and
cause the additional response to be presented at the one or more displays of the head-wearable device.

11. The non-transitory, computer-readable storage medium of any preceding claim, wherein the first response comprises one or more of:
information related to one or more objects detected in the sensor data;
a translation of language detected in the sensor data;
one or more pieces of information to complete one or more tasks associated with the sensor data;
a suggestion to perform one or more tasks based on the sensor data;
an output of one or more other tasks, determined by and performed by Al assistant based on the sensor data;
a zoomed-in portion of the sensor data; and
a suggestion to modify one or more extended-reality (XR) augments presented at the head-wearable device.

12. A system comprising:
a head-wearable device comprising one or more sensors and one or more displays; and
one or more processors configured to:
in response to a user invocation of an ongoing session with an artificially intelligent (AI) assistant at the head-wearable device by a user, wherein the user invocation of the ongoing session is determined to be associated with an Al response-providing trigger, and the AI response-providing trigger is not a verbal input:
receive sensor data captured at the one or more sensors;
at a first point in time:
in accordance with a determination that first sensor data indicates satisfaction of the Al response-providing trigger, generate a first response to the user based on the first sensor data; and
cause the first response to be presented at the one or more displays of the head-wearable device;
at a second point in time:
in accordance with a determination that second sensor data indicates satisfaction of the Al response-providing trigger, generate a second response, distinct from the first response, to the user based on the second sensor data; and
cause the second response to be presented at the one or more displays of the head-wearable device.

13. The system of claim 12, wherein the AI response-providing trigger is one or more point gestures performed by the user.

14. A method comprising:
in response to a user invocation of an ongoing session with an artificially intelligent (AI) assistant at a head-wearable device by a user, wherein the user invocation of the ongoing session is determined to be associated with an Al response-providing trigger, and the AI response-providing trigger is not a verbal input:
capturing sensor data captured at one or more sensors;
at a first point in time:
in accordance with a determination that first sensor data indicates satisfaction of the AI response-providing trigger, generating a first response to the user based on the first sensor data; and
presenting the first response at one or more displays of the head-wearable device;
at a second point in time:
in accordance with a determination that second sensor data indicates satisfaction of the AI response-providing trigger, generating a second response, distinct from the first response, to the user based on the second sensor data; and
presenting the second response at the one or more displays of the head-wearable device.

15. The method of claim 14, wherein the AI response-providing trigger is one or more point gestures performed by the user.
